# EUROPEAN PATENT SPECIFICATION

(11) **EP 2 042 574 B1**
(45) Date of publication and mention of the grant of the patent: **27.07.2011**
(21) Application number: 08016852.9
(22) Date of filing: 25.09.2008
(51) Int. Cl.: C09D 11/10

(54) **White ink composition, inkjet recording method, and printed material**
Weiße Tintenzusammensetzung, Tintenstrahlaufzeichnungsverfahren und gedrucktes Material
Composition d'encre blanche, procédé d'enregistrement à jet d'encre, et matériau imprimé

(30) Priority: 28.09.2007 JP 2007255685
(43) Date of publication of application: 01.04.2009
(73) Proprietor: FUJIFILM Corporation, Minato-ku Tokyo (JP)
(72) Inventor: Watanabe, Kotaro, Ashigarakami-gun Kanagawa (JP); Tojo, Kaoru, Ashigarakami-gun Kanagawa (JP)
(74) Representative: HOFFMANN EITLE

(56) References cited:
- EP-A- 1 829 680
- WO-A-2008/015474

## Description

The present invention relates to a white ink composition for inkjet recording, an inkjet recording method and a printed material.

With regard to an image recording method for forming an image on a recording medium such as paper based on an image data signal, there are an electrophotographic system, sublimation type and melt type thermal transfer systems, an inkjet system, etc. In the electrophotographic system, a process of forming an electrostatic latent image on a photosensitive drum by electrically charging and exposing is required, and the system is complicated; as a result, there is the problem that the production cost is high. With regard to the thermal transfer system, although the equipment is inexpensive, due to the use of an ink ribbon there is the problem that the running cost is high and waste material is generated.

On the other hand, with regard to the inkjet system, the equipment is inexpensive and, since an image is formed directly on a recording medium by discharging an ink only on a required image area, the ink can be used efficiently and the running cost is low. Furthermore, there is little noise and it is excellent as an image recording system.

Japanese registered patent No. 2880845 discloses a UV-curing ink comprising any of a polyester acrylate, a polyether acrylate, an epoxy acrylate, and an alkyd acrylate combined with vinylcaprolactam as a diluent.

JP-A-2006-169419 (JP-A denotes a Japanese unexamined patent application publication) discloses, as an actinic radiation curing inkjet ink for a polyvinyl chloride sheet having excellent adhesion, an actinic radiation curing inkjet ink for a polyvinyl chloride sheet comprising a pigment, a pigment dispersant, and an ethylenic double bond-containing compound, the ethylenic double bond-containing compound comprising a non-polyvinyl chloride-dissolving compound in which polyvinyl chloride is insoluble or sparingly soluble and a polyvinyl chloride-dissolving compound that dissolves polyvinyl chloride, and the polyvinyl chloride-dissolving compound being contained at 20 to 75 wt % relative to the non-polyvinyl chloride-dissolving compound.

It is an object of the present invention io provide a white ink composition for inkjet recording having excellent curability upon exposure to actinic radiation and having suppressed coloration over time even in a high temperature and high humidity environment, an inkjet recording method employing the white ink composition for inkjet recording, and a printed material formed by the inkjet recording method.

The above-mentioned objects can be accomplished by (1), (8), and (q ). (2) to (7 ), which are preferred embodiments, are also shown below.
(1) A white ink composition for inkjet recording comprising:
   an acylphosphine-based photopolymerization initiator in the amount of 12-16 wt.% based on the total weight of the ink composition;
   a monomer having a heterocyclic skeleton;
   a white colorant; and
   a monomer having a cyclic hydrocarbon group selected from Formula (I) and Formula (II): 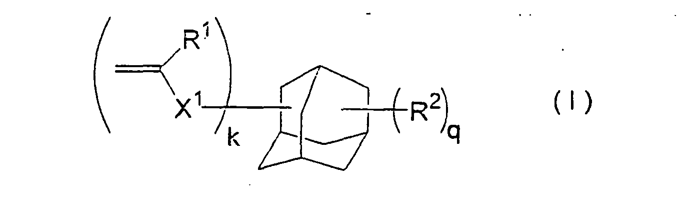 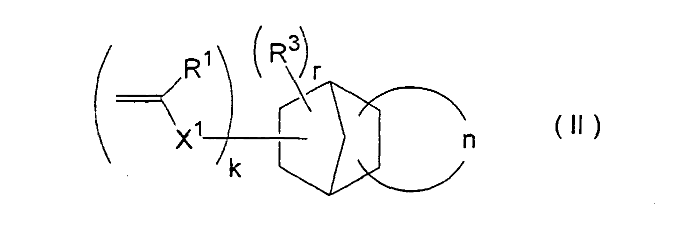 wherein R¹ denotes a hydrogen atom or a methyl group, X¹ denotes a divalent linking group, k denotes an integer from 1 to 6, each R² and each R³ independently denotes a substituent, q denotes an integer from 0 to 5, r denotes an integer from 0 to 5, and the compound represented by Formula (II) may have a cyclic hydrocarbon structure represented by n.
(2) The white ink composition according to (1) , wherein the monomer having a heterocyclic skeleton is included in the amount of 10-60 wt.% based on the total weight of the ink composition.
(3) The white ink composition according to either (1) or (2) , wherein the monomer having a heterocyclic skeleton is represented by Formula (A): 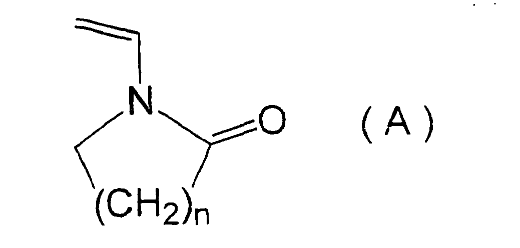 wherein n denotes an integer from 1 to 5.
(4) The white ink composition according to any of (1) to (3), wherein the monomer having a heterocyclic skeleton comprises a (meth)acrylate having at least one heterocyclic group selected from a furan ring, a di- or tetra-hydrofuran ring, a pyran ring, a di- or tetra-hydropyran ring, a morpholine ring, and an imide ring.
(5) The white ink composition according to any of (1) to (4), wherein the acylphosphine-based photopolymerization initiator is a monoacylphosphine oxide compound.
(6) The white ink composition according to any of (1) to (5), wherein the acylphosphine-based photopolymerization initiator is represented by Formula (1): 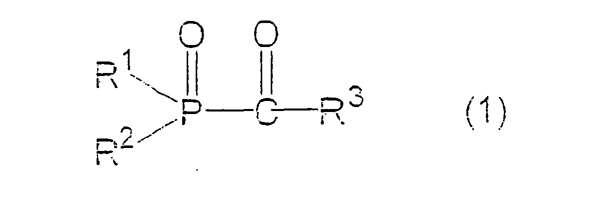 wherein R¹ and R² independently denote an aliphatic group, an aromatic group, an alkoxy group, an aryloxy group, or a heterocyclic group, R³ denotes an aliphatic group, an aromatic group, or a heterocyclic group, R¹ and R² may together form a 5- to 9-membered ring, and the ring structure may have an oxygen atom, a nitrogen atom or a sulfur atom in the ring.
(7) The white ink composition according to any of (1) to (6), wherein the ink composition further comprises a monomer represented by Formula (VI): 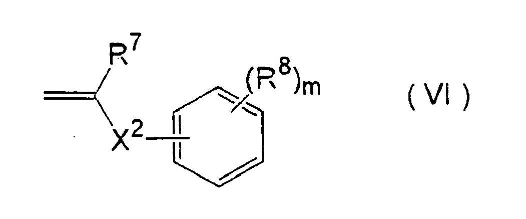 wherein R⁷ denotes a hydrogen atom or a methyl group, X² denotes a divalent linking group, each R⁸ independently denotes a monovalent or polyvalent substituent, and m denotes an integer from 0 to 5.
(8) An inkjet recording method comprising:
   discharging the white ink composition according to any of (1) to (7) onto a recording medium; and
   curing the white ink composition by irradiating the discharged white ink composition with actinic radiation.
(9) A printed material formed by the inkjet recording method according to (8).

### Ink composition

The white ink composition for inkjet recording of the present invention comprises an acylphosphine-based photopolymerization initiator and a monomer having a heterocyclic skeleton, the acylphosphine-based photopolymerization initiator having a content of 10 to 18 wt % relative to the ink composition. A description of a range of values as '10 to 18 wt %', etc. has the same meaning as 'at least 10 wt % but no greater than 18 wt %', and the same applies to other descriptions of ranges of values unless otherwise stated. Furthermore, the white ink composition for inkjet recording of the present invention is also called an 'ink composition' or an 'ink'.

The ink composition of the present invention comprises 10 to 18 wt % of the acylphosphine-based photopolymerization initiator and, compared with a conventional ink composition, it comprises a large amount of acylphosphine-based photopolymerization initiator. By comprising a predetermined amount of such a photopolymerization initiator, it becomes possible to suppress discoloration of a white colorant contained in the ink composition, and coloration of a resultant image over time can be suppressed compared with a conventional white ink composition.

Furthermore, the ink composition of the present invention comprises a monomer having a heterocyclic skeleton. By comprising such a monomer, it becomes possible to provide an ink composition having excellent curability.

The present invention is explained in detail below.

### 1. Photopolymerization initiator

### (1) Acylphosphine-based photopolymerization initiator

The ink composition of the present invention comprises an acylphosphine-based photopolymerization initiator (hereinafter, also called an 'acylphosphine oxide compound') at 10 to 18 wt % relative to the ink composition.

The acylphosphine-based photopolymerization initiator is a compound in which at least one of the hydrogen atoms contained in phosphine (PH₃) is replaced with an acyl group (RCO-), and is a compound that generates a polymerization initiating species upon exposure to actinic radiation. Examples of the actinic radiation include γ rays, β rays, an electron beam, UV rays, visible light, and infrared light, and UV rays and visible light are preferable from the viewpoint of equipment cost and operational safety.

As the acylphosphine-based photopolymerization initiator contained in the ink composition in the present invention, a known acylphosphine-based photopolymerization initiator may be used. With regard to the acylphosphine-based photopolymerization initiator that can be used in the present invention, one type may be used on its own, or two or more types may be used in combination.

As the acylphosphine oxide compound, a monoacylphosphine oxide compound represented by Formula (1) and a bisacylphosphine oxide compound represented by Formula (2) may preferably be used.

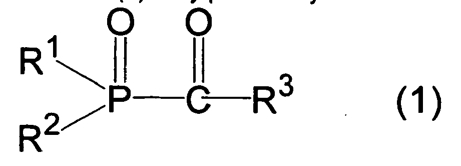

R¹ and R² in Formula (1) above independently denote an aliphatic group, an aromatic group, an alkoxy group, an aryloxy group, or a heterocyclic group, and R³ denotes an aliphatic group, an aromatic group, or a heterocyclic group. R¹ and R² above may be bonded to form a 5-membered to 9-membered ring. The ring structure may be a heterocycle having in the ring structure an oxygen atom, a nitrogen atom, a sulfur atom, etc.

Examples of the aliphatic group represented by R¹, R², or R³ above include an alkyl group, a substituted alkyl group, an alkenyl group, a substituted alkenyl group, an alkynyl group, a substituted alkynyl group, an aralkyl group, and a substituted aralkyl group; among them, an alkyl group, a substituted alkyl group, an alkenyl group, a substituted alkenyl group, an aralkyl group, and a substituted aralkyl group are preferable, and an alkyl group and a substituted alkyl group are particularly preferable.

Furthermore, the aliphatic group may be a cyclic aliphatic group or an open-chain aliphatic group. The open-chain aliphatic group may be branched.

Examples of the alkyl group include straight chain, branched, and cyclic alkyl groups, and the number of carbons in the alkyl group is preferably at least 1 but no greater than 30, and more preferably at least 1 but no greater than 20. A preferred range for the number of carbons in the alkyl moiety of the substituted alkyl group is the same as for the alkyl group above.

Examples of the alkyl group include a methyl group, an ethyl group, a propyl group, a butyl group, a pentyl group, a hexyl group, an octyl group, a 2-ethylhexyl group, a decyl group, a dodecyl group, an octadecyl group, a cyclohexyl group, an cyclopentyl group, a neopentyl group, an isopropyl group, and an isobutyl group.

Examples of the substituent of the substituted alkyl group include -COOH (carboxyl group), -SO₃H (sulfo group), -CN (cyano group), a halogen atom (e.g. a fluorine atom, a chlorine atom, a bromine atom), -OH (hydroxy group), an alkoxycarbonyl group having no greater than 30 carbons (e.g. a methoxycarbonyl group, an ethoxycarbonyl group, a benzyloxycarbonyl group), an alkylsulfonylaminocarbonyl group having no greater than 30 carbons, an arylsulfonylaminocarbonyl group having no greater than 30 carbons, an alkylsulfonyl group having no greater than 30 carbons, an arylsulfonyl group having no greater than 30 carbons, an acylaminosulfonyl group having no greater than 30 carbons, an alkoxy group having no greater than 30 carbons (e.g. a methoxy group, an ethoxy group, a benzyloxy group, a phenoxyethoxy group, a phenethyloxy group), an alkylthio group having no greater than 30 carbons (e.g. a methylthio group, an ethylthio group, a methylthioethylthioethyl group), an aryloxy group having no greater than 30 carbons (e.g. a phenoxy group, a p-tolyloxy group, a 1-naphthoxy group, a 2-naphthoxy group), a nitro group, an alkoxycarbonyloxy group, an aryloxycarbonyloxy group, an acyloxy group having no greater than 30 carbons (e.g. an acetyloxy group, a propionyloxy group), an acyl group having no greater than 30 carbons (e.g. an acetyl group, a propionyl group, a benzoyl group), a carbamoyl group having no greater than 30 carbons (e.g. a carbamoyl group, an *N,N*-dimethylcarbamoyl group, a morpholinocarbonyl group, a piperidinocarbonyl group), a sulfamoyl group having no greater than 30 carbons (e.g. a sulfamoyl group, an *N,N*-dimethylsulfamoyl group, a morpholinosulfonyl group, a piperidinosulfonyl group), a substituted amino group having no greater than 30 carbons (e.g. an amino group, an alkylamino group, a dialkylamino group, an arylamino group, a diarylamino group, an acylamino group), a substituted ureido group having no greater than 30 carbons, a substituted phosphono group having no greater than 30 carbons, and a heterocyclic group having no greater than 30 carbons. Here, the carboxyl group, the sulfo group, the hydroxy group, and the phosphono group may be in the form of a salt. In this case, a cation forming the salt is a group that can form a positive ion, and is preferably an organic cationic compound, a transition metal coordination complex cation (a compound described in Japanese registered patent No. 2791143, etc.), or a metal cation (e.g. Na⁺, K⁺, Li⁺, Ag⁺, Fe²⁺, Fe³⁺, Cu⁺, Cu²⁺, Zn²⁺, Al³⁺)_{.}

Examples of the alkenyl group include straight chain, branched, and cyclic alkenyl groups, and the number of carbons of the alkenyl group is preferably at least 2 but no greater than 30, and more preferably at least 2 but no greater than 20. Furthermore, the alkenyl group may be an unsubstituted alkenyl group or a substituted alkenyl group having a substituent, and a preferred range for the number of carbons in the alkenyl moiety of the substituted alkenyl group is the same as for the alkenyl group above. Examples of the substituent of the substituted alkenyl group include the same substituents as for the above substituted alkyl group and an aryl group having no greater than 30 carbons (e.g. a phenyl group, a 4-chlorophenyl group, a 4-methylphenyl group, an α-naphthyl group).

Examples of the alkynyl group include straight chain, branched, and cyclic alkynyl groups, and the number of carbons of the alkynyl group is preferably at least 2 but no greater than 30, and more preferably at least 2 but no greater than 20. Furthermore, the alkynyl group may be an unsubstituted alkynyl group or a substituted alkynyl group having a substituent, and a preferred range for the number of carbons in the alkynyl moiety of the substituted alkynyl group is the same as for the alkynyl group above. Examples of the substituent of the substituted alkynyl group include the same substituents as for the above substituted alkenyl group.

Examples of the aralkyl group include aralkyl groups having a straight chain, branched, or cyclic alkyl side chain; the number of carbons of the aralkyl group is preferably at least 7 but no greater than 35, and more preferably at least 7 but no greater than 25. Furthermore, the aralkyl group may be an unsubstituted aralkyl group or a substituted aralkyl group having a substituent, and a preferred range for the number of carbons in the aralkyl moiety of the substituted aralkyl group is the same as for the aralkyl group above. Examples of the substituent of the substituted aralkyl group include the same substituents as for the above substituted alkenyl group. Furthermore, the aryl moiety of the aralkyl group may have a substituent, and examples of the substituent include the same substituents as for the substituted alkyl group above and straight chain, branched, and cyclic alkyl groups having no greater than 30 carbons.

Examples of the aromatic group represented by R¹, R², or R³ include an aryl group and a substituted aryl group. The number of carbons of the aryl group is preferably at least 6 but no greater than 30, and more preferably at least 6 but no greater than 20. A preferred range for the number of carbons in the aryl moiety of the substituted aryl group is the same as for the aryl group above. Examples of the aryl group include a phenyl group, an α-naphthyl group, and a β-naphthyl group. Examples of the substituent of the substituted aryl group include the same substituents as for the above substituted alkenyl group, and straight chain, branched, and cyclic alkyl groups having no greater than 30 carbons.

The alkoxy group represented by R¹ or R² above is preferably an alkoxy group having at least 1 but no greater than 30 carbons, and examples thereof include a methoxy group, an ethoxy group, a butoxy group, an octyloxy group, and a phenoxyethoxy group. However, the examples are not limited thereto.

The aryloxy group represented by R¹ or R² above is preferably an aryloxy group having at least 6 but no greater than 30 carbons, and examples thereof include a phenoxy group, a methylphenyloxy group, a chlorophenyloxy group, a methoxyphenyloxy group, and an octyloxyphenyloxy group. However, the examples are not limited thereto.

The heterocyclic group represented by R¹, R², or R³ above is preferably an N, O, or S atom-containing heterocyclic group, and examples thereof include a pyridyl group, a furyl group, a thienyl group, an imidazolyl group, and a pyrrolyl group.

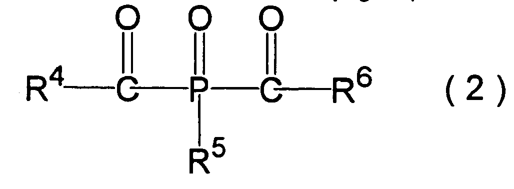

R⁴ and R⁶ in Formula (2) above independently denote an alkyl group, an aryl group, or a heterocyclic group, and R⁵ denotes an alkyl group, an aryl group, an alkoxy group, an aryloxy group, or a heterocyclic group.

The alkyl group, aryl group, heterocyclic group, alkoxy group, and aryloxy group denoted by R⁴, R⁵, or R⁶ may have a substituent, and examples of the substituent include the same substituents as in the case of Formula (1) above.

The alkyl group, aryl group, heterocyclic group, alkoxy group, and aryloxy group in Formula (2) above are the same as those in Formula (1) above.

The compound represented by Formula (1) above is preferably a compound represented by Formula (3) below.

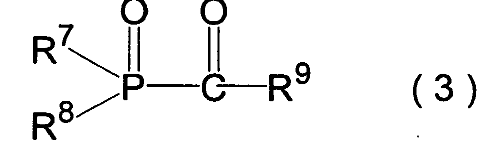

In Formula (3), R⁷ and R⁸ independently denote a phenyl group, a methoxy group, or an isopropoxy group, and R⁹ denotes a 2,4,6-trimethylphenyl group, a 2,4-dimethylphenyl group, a 2-methylphenyl group (o-toluyl group), an isobutyl group, or a *t*-butyl group.

The compound represented by Formula (2) above is preferably a compound represented by Formula (4) below.

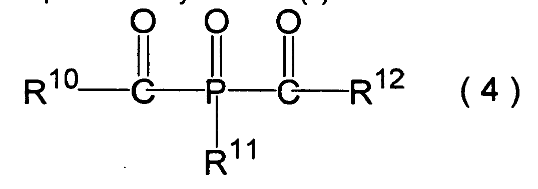

In Formula (4), R¹⁰ and R¹² independently denote a 2,4,6-trimethylphenyl group, a 2,6-dimethylphenyl group, or a 2,6-dimethoxyphenyl group, and R¹¹ denotes a phenyl group or a 2,4,4-trimethylpentyl group.

As the acylphosphine oxide compound, a monoacylphosphine oxide compound represented by Formula (1) and a bisacylphosphine oxide compound represented by Formula (2) may preferably be used.

The compound represented by Formula (1) is also preferably a compound represented by Formula (5).

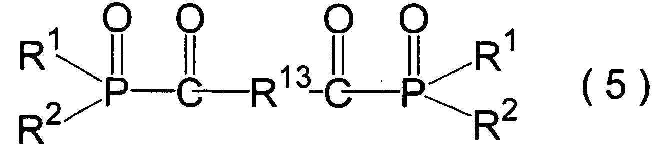

In Formula (5) above, R¹ and R² independently denote an aliphatic group, an aromatic group, an alkoxy group, an aryloxy group, or a heterocyclic group, and have the same meanings as R¹ and R² in Formula (1), and preferred ranges are also the same.

R¹³ denotes a divalent linking group; the divalent linking group is an optionally substituted alkylene group having 1 to 10 carbons, and it is preferably an alkylene group having 1 to 6 carbons.

Examples of the acylphosphine oxide compound represented by Formula (1) or (2) above include compounds described in JP-B-63-40799 (JP-B denotes a Japanese examined patent application publication), JP-B-5-29234, JP-A-10-95788, JP-A-10-29997, etc.

Specific examples of the acylphosphine oxide compound include the compounds (compound examples (P-1) to (P-28)) shown below, but the present invention is not limited thereto.

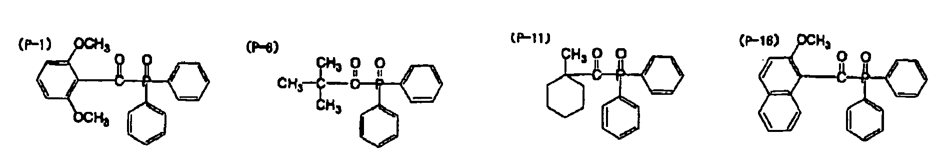

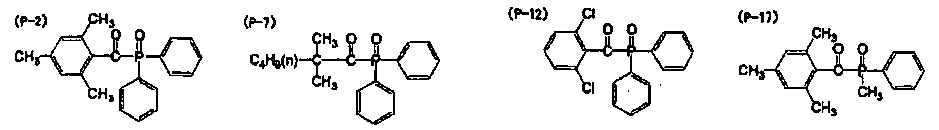

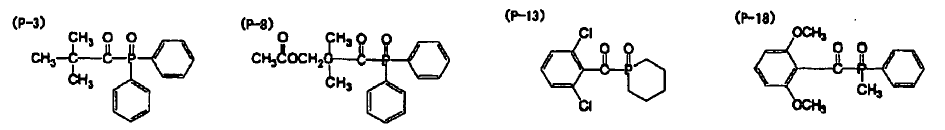

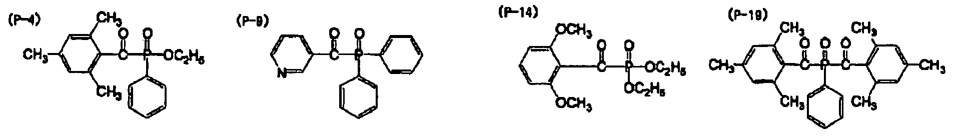

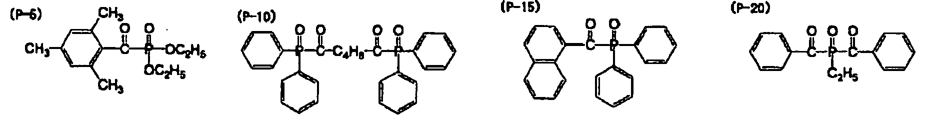

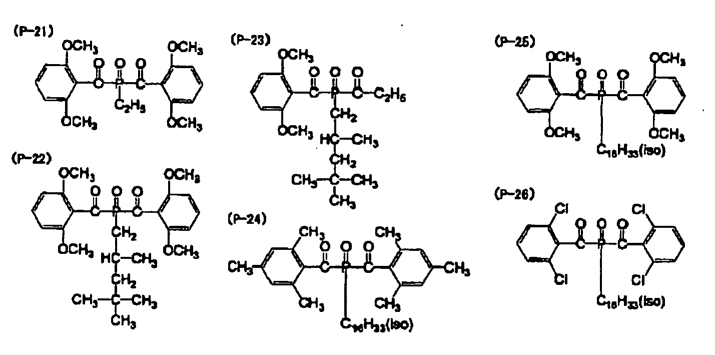

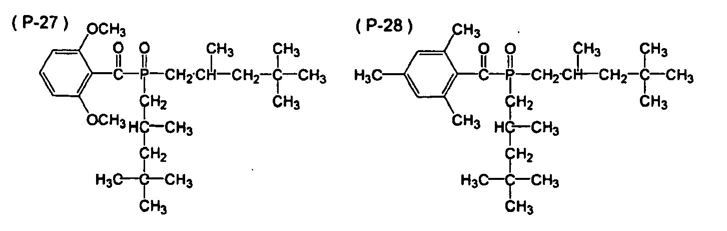

As the monoacylphosphine oxide compound, a known monoacylphosphine oxide compound may be used. Examples thereof include monoacylphosphine oxide compounds described in JP-B-60-8047 and JP-B-63-40799.

Specific examples thereof include 2,4,6-trimethylbenzoyldiphenylphosphine oxide, methyl isobutyrylmethylphosphinate, methyl isobutyrylphenylphosphinate, methyl pivaloylphenylphosphinate, methyl 2-ethylhexanoylphenylphosphinate, isopropyl pivaloylphenylphosphinate, methyl p-toluylphenylphosphinate, methyl *o*-toluylphenylphosphinate, methyl 2,4-dimethylbenzoylphenylphosphinate, isopropyl *p*-*tert*-butylbenzoylphenylphosphinate, methyl acryloylphenylphosphinate, isobutyryldiphenylphosphine oxide, 2-ethylhexanoyldiphenylphosphine oxide, *o*-toluyldiphenylphosphine oxide, *p*-*tert*-butylbenzoyldiphenylphosphine oxide, 3-pyridylcarbonyldiphenylphosphine oxide, acryloyldiphenylphosphine oxide, benzoyldiphenylphosphine oxide, vinyl pivaloylphenylphosphinate, adipoylbis(diphenylphosphine oxide), pivaloyldiphenylphosphine oxide, p-toluyldiphenylphosphine oxide, 4-(*tert*-butyl)benzoyldiphenylphosphine oxide, 2-methylbenzoyldiphenylphosphine oxide, 2-methyl-2-ethylhexanoyldiphenylphosphine oxide, 1-methylcyclohexanoyldiphenylphosphine oxide, methyl pivaloylphenylphosphinate, and isopropyl pivaloylphenylphosphinate.

As the bisacylphosphine oxide compound, a known bisacylphosphine oxide compound may be used. Examples thereof include bisacylphosphine oxide compounds described in JP-A-3-101686, JP-A-5-345790, and JP-A-6-298818.

Specific examples thereof include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

As the acylphosphine-based photopolymerization initiator used in the present invention, from the viewpoint of excellent solubility in the ink composition, a monoacylphosphine oxide compound represented by Formula (1) is preferable, and specifically P-1, P-2 (2,4,6-trimethylbenzoyldiphenylphosphine oxide (DAROCUR TPO: Ciba Specialty Chemicals, Lucirin TPO: BASF)), P-27, P-28, etc. are more preferable.

The content of the acylphosphine-based photopolymerization initiator is 10 to 18 wt % relative to the ink composition, and more preferably 12 to 16 wt %.

When the content of the acylphosphine-based photopolymerization initiator is less than 10 wt %, an inkjet-recorded image changes over time (coloration) under high temperature and high humidity.

Furthermore, when the content of the acylphosphine-based photopolymerization initiator exceeds 18 wt %, solubility in the ink composition becomes poor.

### (2) Other radical polymerization initiator

The ink composition of the present invention preferably contains only the acylphosphine-based photopolymerization initiator, but may contain a radical polymerization initiator other than the acylphosphine-based photopolymerization initiator as necessary, and as the other radical polymerization initiator a known radical polymerization initiator may be used.

With regard to the radical polymerization initiator that can be used in the present invention, one type thereof may be used on its own or two or more types may be used in combination. It is also possible to use in combination the radical polymerization initiator and a cationic polymerization initiator, which will be described later. The radical polymerization initiator used in the ink composition of the present invention is a compound that generates a radical polymerization initiating species upon absorption of external energy. The external energy used for initiating polymerization is broadly divided into heat and actinic radiation, and a thermal polymerization initiator and a photopolymerization initiator are used respectively. Examples of the actinic radiation include γ rays, β rays, an electron beam, UV rays, visible light, and infrared light.

Examples of the radical polymerization initiator that can be used in the present invention include aromatic ketones, aromatic onium salt compounds, organic peroxides, thio compounds, hexaarylbiimidazole compounds, ketoxime ester compounds, borate compounds, azinium compounds, metallocene compounds, active ester compounds, carbon halogen bond-containing compounds, and alkylamine compounds. These radical polymerization initiators may be used on their own or in combination.

Furthermore, when a sensitizer, which will be described later, is used in the ink composition of the present invention, the total amount of polymerization initiator used is preferably 200:1 to 1:200 relative to the sensitizer as a ratio by weight of polymerization initiator: sensitizer, more preferably 50:1 to 1:50, and yet more preferably 20:1 to 1:5.

### 2. Monomer

### (1) Monomer having heterocyclic skeleton

The white ink composition for inkjet recording of the present invention comprises a monomer having a heterocyclic skeleton.

The heterocyclic skeleton referred to here means a ring having at least one heteroatom as an atom forming the ring, and is preferably a cyclic hydrocarbon ring containing at least one heteroatom selected from the group consisting of a nitrogen atom, an oxygen atom, and a sulfur atom as an atom forming the ring.

The monomer having a heterocyclic skeleton is preferably a monomer having at least one cyclic hydrocarbon group containing at least one heteroatom as an atom forming the ring (hereinafter, also called a 'heterocyclic group').

The heterocyclic group may be a group in which one or more hydrogen atoms are removed from a cyclic hydrocarbon ring (an alicyclic ring, an aromatic ring, a condensed ring, a bridged ring, etc.) containing at least one heteroatom as an atom forming the ring, and may be a monovalent group or a di- or higher-valent group.

The heterocyclic group may be a group in which one or more hydrogen atoms are removed from a cyclic hydrocarbon ring containing an amide bond (-CONH-), an imide bond (-CONHCO-), an ester bond (-CO(O)), etc.

The heterocyclic group may have a substituent on a carbon atom or a hetero atom into which it can be introduced. Examples of substituents that can be introduced include an alkyl group, a hydroxy group, a cyano group, a halogen atom (a fluorine atom, a chlorine atom, a bromine atom, an iodine atom), an amino group, a carboxy group, an acyl group, an alkoxycarbonyl group, an alkoxy group, a nitro group, and a carbonyl group formed by a double bond between an oxygen atom and a carbon atom forming a ring.

Moreover, two or more substituents may be bonded to form a ring.

Preferred examples of the heterocyclic group include a hetero atom-containing alicyclic hydrocarbon group and a hetero atom-containing aromatic hydrocarbon group, and more preferred examples thereof include a hetero atom-containing alicyclic hydrocarbon group.

A ring constituting the heterocyclic group is preferably a 3- to 7-membered ring, more preferably a 4- to 7-membered ring, and most preferably a 5- or 6-membered ring.

The heterocyclic group may contain a double bond.

The ring constituting the heterocyclic group may be a monocyclic ring, a condensed ring in which a plurality of rings are condensed, or a bridged ring. Furthermore, the ring constituting the heterocyclic group may be a ring in which an aromatic ring and an alicyclic ring are condensed.

Specific examples of heterocycles contained in the heterocyclic group include a cyclic ether, a cyclic imine, a cyclic imide, a lactone, and a lactam, and among them a cyclic imide and a lactam are preferable.

Other than the above, specific examples of the heterocycle include a furan ring, a di- or tetra-hydrofuran ring, a thiophene ring, a pyrrole ring, a pyrroline ring, a pyrrolidine ring, an oxazole ring, an isooxazole ring, a thiazole ring, an isothiazole ring, an imidazole ring, an imidazolidine ring, a pyrazole ring, a pyrazoline ring, a triazole ring, a furazan ring, a tetrazole ring, a pyran ring, a thymine ring, a pyridine ring, a piperidine ring, an oxazine ring, a morpholine ring, a thiazine ring, a pyridazine ring, a pyridine ring, a piperazine ring, and derivatives of these heterocycles, and among them a di- or tetra-hydrofuran ring and a morpholine ring are preferable.

These rings may have the above-mentioned substituent.

In the present invention, the monomer having a heterocyclic skeleton is preferably an addition-polymerizable monomer, more preferably a monomer having an ethylenically unsaturated bond, and yet more preferably a radically polymerizable monomer.

The monomer preferably has at least one ethylenically unsaturated bond-containing group, more preferably has 1 to 3 ethylenically unsaturated bond-containing groups, and yet more preferably has one ethylenically unsaturated bond-containing group.

Examples of the ethylenically unsaturated bond-containing group referred to here include a vinyl group, an allyl group, a (meth)acryloyl group (the (meth)acryloyl group referred to here means a 'methacryloyl group' or an 'acryloyl group', the same applies below), a (meth)acrylic group, and a (meth)acrylamide group, and among them a (meth)acryloyl group and a vinyl group are preferable.

The heterocyclic group and the ethylenically unsaturated bond-containing group may be bonded via a single bond or a polyvalent linking group, and the polyvalent linking group is preferably a divalent linking group.

The divalent linking group is preferably an ether group (-O-), an ester group (-C(O)O- or -OC(O)-), an amide group (-C(O)NR'-), a carbonyl group (-C(O)-), a nitrogen atom (-NR'-), an optionally substituted alkylene group having 1 to 15 carbons, or a divalent group formed by combining two or more thereof. R' denotes a hydrogen atom, a straight-chain, branched, or cyclic alkyl group having 1 to 20 carbons, or an aryl group having 6 to 20 carbons.

Specific examples of the monomer having a heterocyclic skeleton that can be used in the present invention are explained below.

### (1-1) N-Vinyllactam

The ink composition of the present invention preferably comprises an N-vinyllactam.

Preferred specific examples of the monomer having a heterocyclic skeleton include an *N*-vinyllactam. Preferred examples of the *N*-vinyllactam that can be used in the present invention include a compound represented by Formula (A).

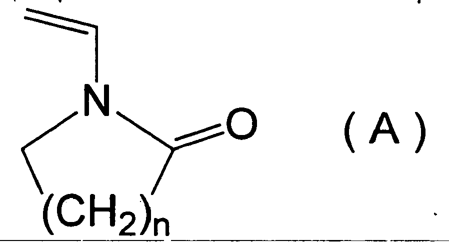

In Formula (A), n denotes an integer of 1 to 5; n is preferably an integer of 2 to 4 from the viewpoint of flexibility after the ink composition is cured, adhesion to a recording medium, and ready availability of starting materials, n is more preferably 2 or 4, and n is particularly preferably 4, which is *N*-vinylcaprolactam. *N*-Vinylcaprolactam is preferable since it has excellent safety, is commonly used and is readily available at a relatively low price, and gives particularly good ink curability and adhesion of a cured film to a recording medium.

The *N*-vinyllactam may have a substituent such as an alkyl group or an aryl group on the lactam ring, and may have a saturated or unsaturated ring structure bonded to the lactam ring.

### (1-2) Other monomer having heterocyclic skeleton

In addition to the N-vinyllactams, as the monomer having a heterocyclic skeleton, the (meth)acrylates having a heterocyclic group are preferable, and among them a (meth)acrylate having a heterocycle selected from the group consisting of a furan ring, a di- or tetra-hydrofuran ring, a pyran ring, a di- or tetra-hydropyran ring, a morpholine ring, and an imide ring is preferable.

Examples of the (meth)acrylate having a furan ring include furfuryl (meth)acrylate, examples of the (meth)acrylate having a di- or tetra-hydrofuran ring include tetrahydrofuryl (meth)acrylate, tetrahydrofurfuryl (meth)acrylate, and a caprolactone-modified tetrahydrofurfuryl (meth)acrylate, examples of the (meth)acrylate having a pyran ring include pyranyl (meth)acrylate, examples of the (meth)acrylate having a di- or tetra-hydropyran ring include dihydropyranyl (meth)acrylate, tetrahydropyranyl (meth)acrylate, dimethyldihydropyranyl (meth)acrylate, and dimethyltetrahydropyranyl (meth)acrylate, examples of the (meth)acrylate having a morpholine ring include *N*-(meth)acryloylmorpholine, and examples of the acrylate having an imide ring include an imide-acrylate (Aronix TO-1428, Toagosei Co., Ltd.). Among them, tetrahydrofurfuryl (meth)acrylate, *N*-(meth)acryloylmorpholine, an imide-acrylate (Aronix TO-1428, Toagosei Co., Ltd.), etc. are preferable.

In the present invention, the content of the monomer having a heterocyclic skeleton is preferably 10 to 60 wt % relative to the ink composition, more preferably 20 to 60 wt %, and yet more preferably 20 to 55 wt %.

When within the above-mentioned range of values, the curing properties of an image obtained by inkjet recording are excellent.

With regard to the monomer having a heterocyclic skeleton, one type thereof may be used or two or more types thereof may be used in combination, and it is preferable to use in combination an *N*-vinyllactam and another monomer having a heterocyclic skeleton. The ink composition of the present invention preferably comprises, relative to the ink composition, at least 5 wt % of an N-vinyllactam, more preferably 5 to 40 wt %, and yet more preferably 10 to 40 wt %. When the amount of *N*-vinyllactam used is within the above-mentioned range of values, the curability, flexibility of a cured coating, and adhesion of a cured coating to a substrate are excellent.

An *N*-vinyllactam is a compound having a relatively high melting point. It is preferable for the content of the *N*-vinyllactam to be no greater than 40 wt % since good solubility is obtained even at a low temperature of no greater than 0°C, and the temperature range in which the ink composition can be handled becomes large. With regard to the N-vinyllactam, the ink composition may comprise only one type thereof or may comprise a plurality of types thereof.

### (2) Monomer having cyclic hydrocarbon group

The ink composition of the present invention preferably comprises, in addition to the monomer having a heterocyclic skeleton, a monomer having a cyclic hydrocarbon group. The monomer having a cyclic hydrocarbon group is preferably an addition-polymerizable monomer, and more preferably an ethylenically unsaturated compound.

The monomer having a cyclic hydrocarbon group is yet more preferably a monomer represented by Formula (I) or Formula (II).

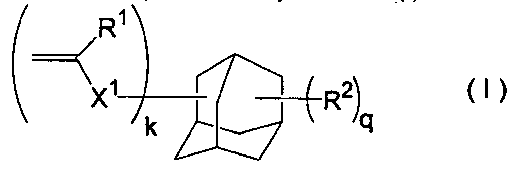

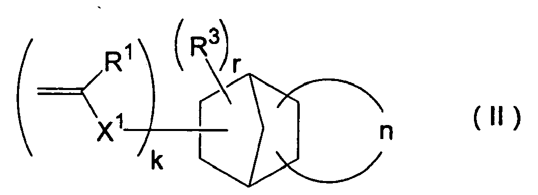

In Formula (I) and Formula (II), R¹ denotes a hydrogen atom or a methyl group, X¹ denotes a divalent linking group, k denotes an integer of 1 to 6, the q R²s and the r R³s independently denote a substituent, q denotes an integer of 0 to 5, r denotes an integer of 0 to 5, and the compound represented by Formula (II) may have a cyclic hydrocarbon structure represented by n.

In Formula (I) and Formula (II), R¹ denotes a hydrogen atom or a methyl group, and when k is 2 or greater a plurality of R¹s may be identical to or different from each other.

X¹ in Formula (I) or Formula (II) denotes a divalent linking group, and is preferably an ether group (-O-), an ester group (-C(O)O- or -OC(O)-), an amide group (-C(O)NR'- or -NR'C(O)-), a carbonyl group (-C(O)-), a nitrogen atom (-NR'-), an optionally substituted alkylene group having 1 to 15 carbons, or a divalent group in which 2 or more thereof are combined. Moreover, R' denotes a hydrogen atom, a straight-chain, branched, or cyclic alkyl group having 1 to 20 carbons, or an aryl group having 6 to 20 carbons. The k X¹s may be identical to or different from each other.

Furthermore, a terminal portion of X¹ that is bonded to the vinyl group in Formula (I) or Formula (II) is preferably an ester group or amide group in which a carbonyl carbon of X¹ and a vinyl group are bonded, and in this case another portion of X¹ that is bonded to the adamantane framework or the norbornene framework may be a single bond or may be selected freely from the above-mentioned groups.

The substitution number k of the vinyl portion (H₂C=C(R¹)-X¹-) containing R¹ and X¹ in Formula (I) or Formula (II) denotes an integer of 1 to 6. The vinyl portion containing R¹ and X¹ may be bonded at any position to each alicyclic hydrocarbon structure. Here, 'to each alicyclic hydrocarbon structure' means to the adamantane structure in Formula (I), to the norbornene structure in Formula (II), and to the cyclic hydrocarbon structure containing n.

Furthermore, from the viewpoint of improving the affinity with a coloring material, a terminal portion of X¹ that is bonded to the alicyclic hydrocarbon structure in Formula (I) or Formula (II) is preferably an oxygen atom, and more preferably an ether type oxygen atom, and X¹ in Formula (I) or Formula (II) is yet more preferably -C(O)O(CH₂CH₂O)ₚ- (p denotes 1 or 2).

R² and R³ in Formula (I) or Formula (II) independently denote a substituent that may be bonded to any position on each of the alicyclic hydrocarbon structures. Furthermore, the q R²s and the r R³s may each be identical to or different from each other.

The q R²s and the r R³s may independently be a monovalent or polyvalent substituent; the monovalent substituent is preferably a hydrogen atom, a hydroxyl group, a substituted or unsubstituted amino group, a thiol group, a siloxane group, or an optionally substituted hydrocarbon group or heterocyclic group having a total number of carbons of 30 or less, and a divalent substituent is preferably an oxy group (=O).

The substitution number q for R² denotes an integer of 0 to 5, and the substitution number r for R³ denotes an integer of 0 to 5.

n in Formula (II) denotes a cyclic hydrocarbon structure; opposite ends thereof may substitute any position of the norbornene framework, it may be a monocyclic structure or a polycyclic structure, and it may comprise as the cyclic hydrocarbon structure a carbonyl bond (-C(O)-) and/or an ester bond (-C(O)O-) in addition to hydrocarbon bonds.

Furthermore, one carbon atom of the adamantane framework in Formula (I) may be replaced by a carbonyl bond (-C(O)-) and/or an ester bond (-C(O)O-), and one carbon atom of the norbornene framework in Formula (II) may be replaced by an ether bond (-O-) and/or an ester bond (-C(O)O-).

The monomer represented by Formula (II) is preferably a monomer represented by Formula (III), Formula (IV), or Formula (V). 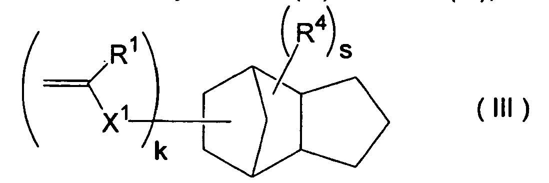 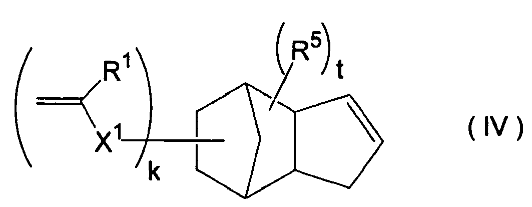 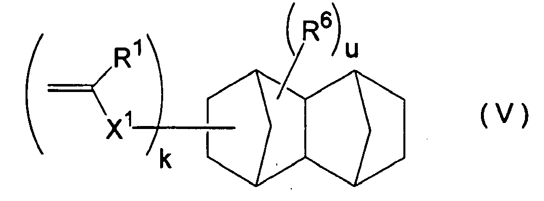 (In Formula (III), Formula (IV), and Formula (V), R¹ denotes a hydrogen atom, a halogen atom, or an alkyl group having 1 to 4 carbons, X¹ denotes a divalent linking group, R⁴, R⁵, and R⁶ independently denote a substituent, k denotes an integer of 1 to 6, s, t, and u independently denote an integer of 0 to 5, and the s R⁴s, the t R⁵s, and the u R⁶s may each be identical to or different from each other.)

R¹, X¹, and k in Formula (III), Formula (IV), or Formula (V) have the same meanings as those for R¹, X¹, and k in Formula (I) or Formula (II), and preferred ranges are also the same.

The vinyl portion containing R¹ and X¹ in Formula (III), Formula (IV), or Formula (V) may be bonded to any position on each of the alicyclic hydrocarbon structures shown below in Formula (III), Formula (IV), or Formula (V).

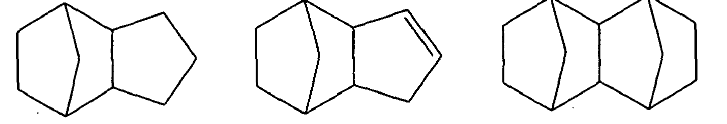

R⁴, R⁵, and R⁶ in Formula (III), Formula (IV), and Formula (V) independently denote a substituent, and may be bonded to any position of the respective alicyclic hydrocarbon structures in Formula (III), Formula (IV), and Formula (V). The substituents R⁴, R⁵, and R⁶ have the same meaning as that of the substituents R² and R³ of Formula (I) or Formula (II), and preferred ranges are also the same.

s, t, and u in Formula (III), Formula (IV), or Formula (V) independently denote an integer of 0 to 5, and the s R⁴s, the t R⁵s, and the u R⁶s may each be identical to or different from each other.

As the monomer represented by Formula (I) or Formula (II), specific preferred examples of monofunctional acrylates are shown below.

In some of the compound examples below, a hydrocarbon chain is expressed by a simplified structural formula in which symbols for carbon (C) and hydrogen (H) are omitted.

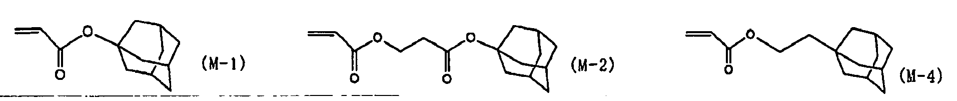

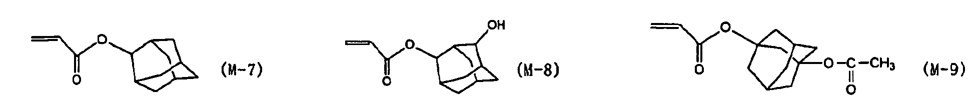

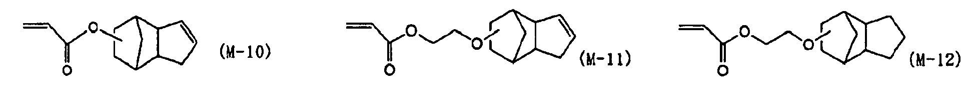

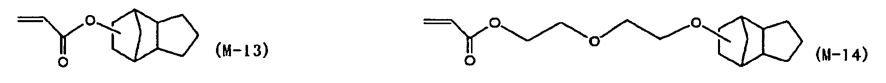

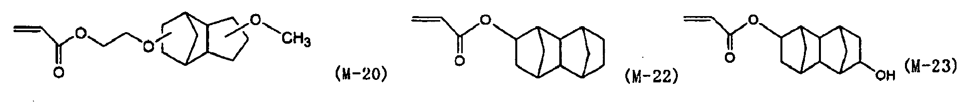

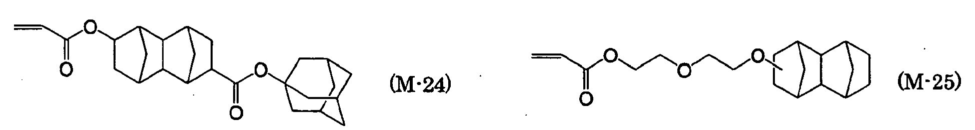

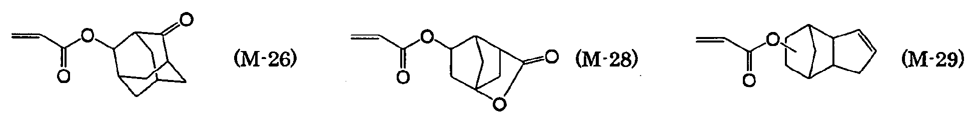

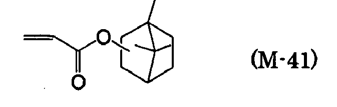

As the monomer represented by Formula (I) or Formula (II), specific preferred examples of monofunctional methacrylates are shown below.

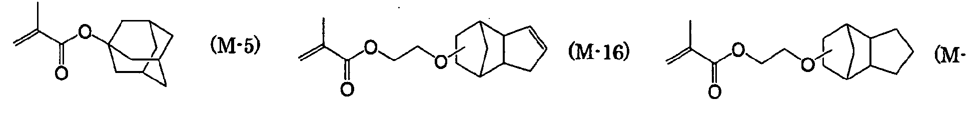

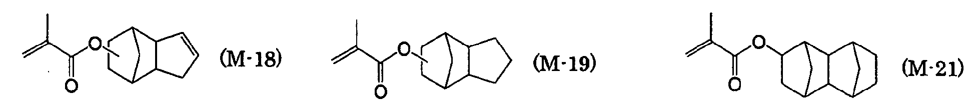

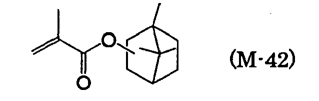

As the monomer represented by Formula (I) or Formula (II), specific preferred examples of monofunctional acrylamides are shown below.

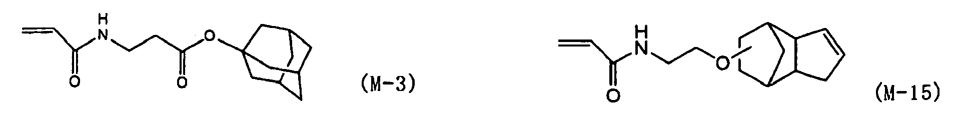

As the monomer represented by Formula (I) or Formula (II), specific preferred examples of monofunctional vinyl ethers are shown below.

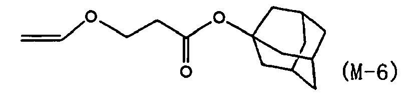

Specific preferred examples of polyfunctional acrylates represented by Formula (I) or Formula (II) are shown below.

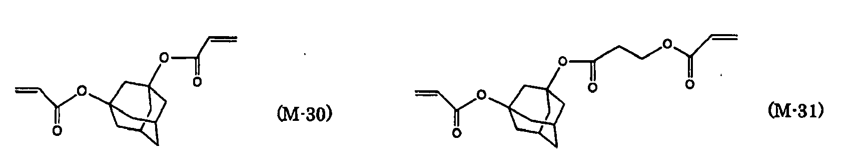

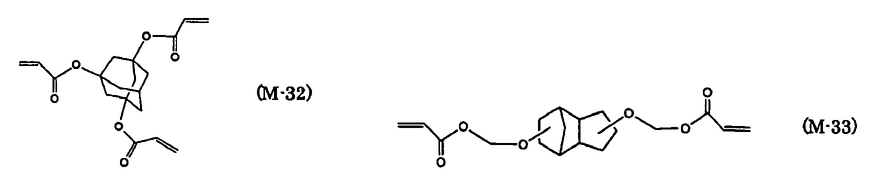

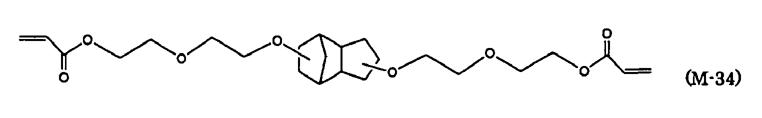

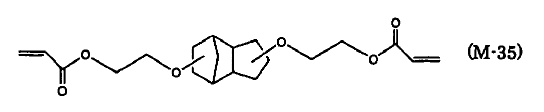

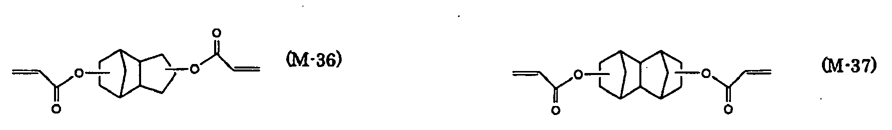

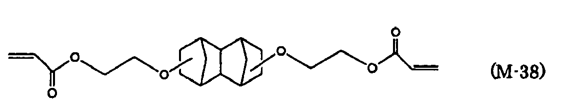

Specific preferred examples of polyfunctional methacrylates represented by Formula (I) or Formula (II) are shown below.

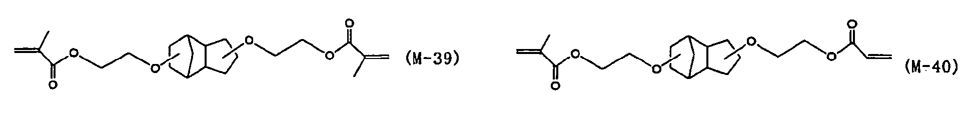

As the monomer having a cyclic hydrocarbon group, a monomer having an aromatic hydrocarbon group may also preferably be used. The monomer having an aromatic hydrocarbon group is preferably a monomer represented by Formula (VI).

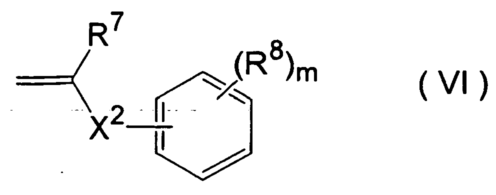

In Formula (VI), R⁷ denotes a hydrogen atom or a methyl group, X² denotes a divalent linking group, the m R⁸s independently denote a monovalent or polyvalent substituent, and m denotes an integer of 0 to 5.

X² denotes a first divalent linking group in which (-C(O)O-) or (-C(O)NH-) is bonded to the ethylenically unsaturated double bond shown in Formula (VI), and to this first divalent linking group may be bonded a second divalent linking group comprising a single bond, an ether bond (-O-), an ester bond (-C(O)O- or -OC(O)-), an amide bond (-C(O)NH- or -NHC(O)-), a carbonyl bond (-C(O)-), an optionally branched alkylene group having no greater than 20 carbons, or a combination thereof.

It is preferable for X² to be the first divalent linking group alone or one having an ether bond, an ester bond, an alkylene group having no greater than 20 carbons, or a divalent group in which 2 or more thereof are combined when it has the second divalent linking group.

The end of X² that is bonded to the vinyl group is preferably an carboxylic ester group via which a carbonyl carbon of X² is bonded to the vinyl group. One having the structure H₂C=C(R⁷)-C(O)O- is particularly preferable. In this case, another moiety of X² that is bonded to the aromatic ring may be a single bond or one freely selected from the groups above.

The vinyl moiety containing R⁷ and X² (H₂C=C(R⁷)-X²-) may be bonded to any position of the aromatic ring. From the viewpoint of improving affinity with a colorant, the end of X² bonded to the aromatic ring in Formula (VI) is preferably an oxygen atom, and more preferably an ethereal oxygen atom, and X² in Formula (VI) is yet more preferably -C(O)O(CH₂CH₂O)ₚ- (p denotes 1 or 2).

The m R⁸s may independently be a monovalent or polyvalent substituent, and the monovalent substituent is preferably a hydroxyl group, a substituted or unsubstituted amino group, thiol group, or siloxane group, or an optionally substituted hydrocarbon group or heterocyclic group having a total number of carbons of no greater than 30. In Formula (VI), the plurality of R⁸s preferably form an aromatic ring when they are bonded to each other to form a ring.

That is, in Formula (VI), the aromatic group is preferably a group (a phenyl group, a phenylene group, etc.) in which at least one hydrogen is removed from benzene, which is a monocyclic aromatic group, or a polycyclic aromatic group having 2 to 4 rings, but is not limited thereto. Specific examples thereof include a group in which at least one hydrogen atom is removed from naphthalene, anthracene, 1H-indene, 9H-fluorene, 1H-phenalene, phenanthrene, triphenylene, pyrene, naphthacene, tetraphenylene, biphenylene, as-indacene, s-indacene, acenaphthylene, fluoranthene, acephenanthrylene, aceanthrylene, chrysene, or pleiadene. In the present invention, a preferable polycyclic aromatic group is a polycyclic aromatic group having 2 or 3 rings, and a naphthyl group is specially preferable.

These aromatic groups may have one or more halogen atom, hydroxyl group, amino group, thiol group, siloxane group, or substituent having no greater than 30 carbons.

Preferred specific examples of the aromatic monofunctional radically polymerizable monomer include, but are not limited to, [L-1] to [L-62] below.

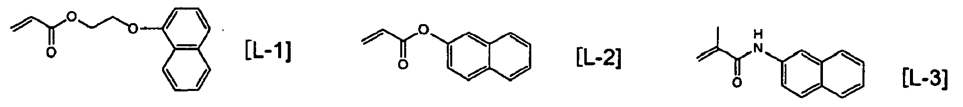

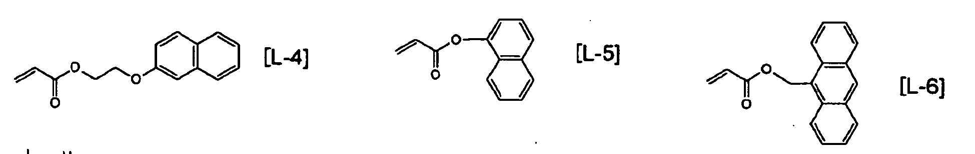

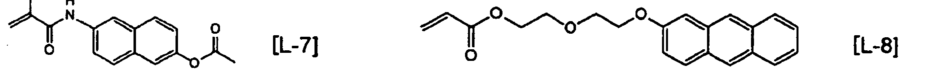

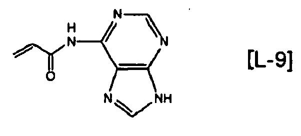

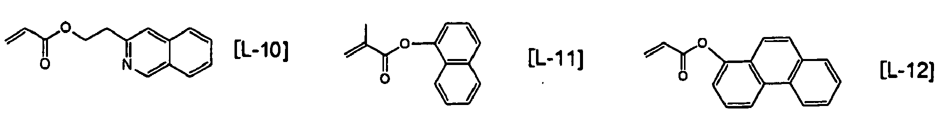

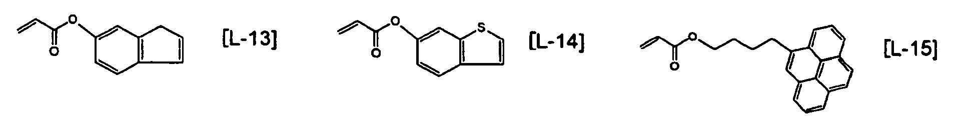

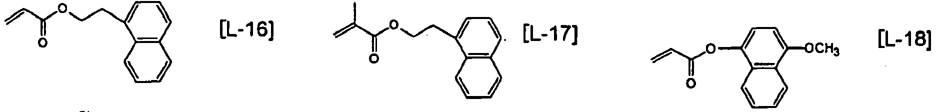

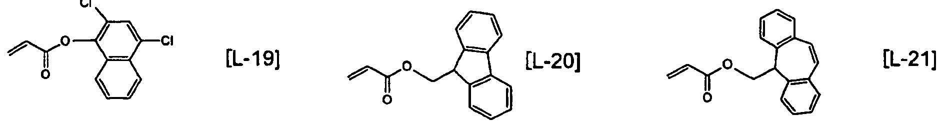

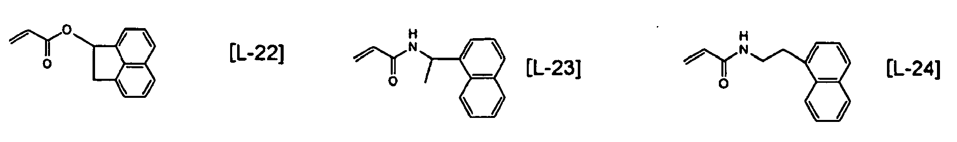

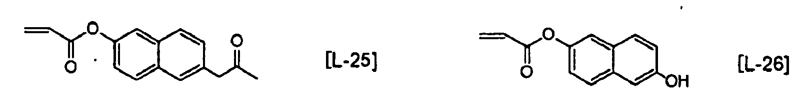

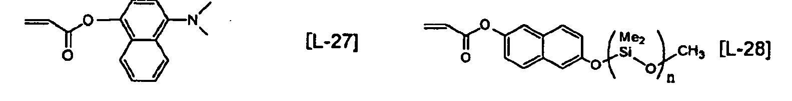

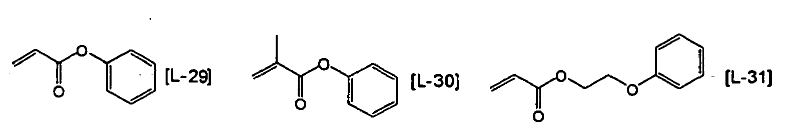

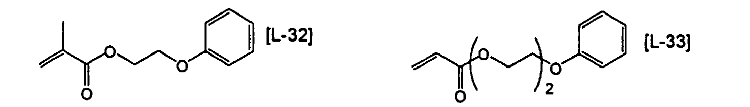

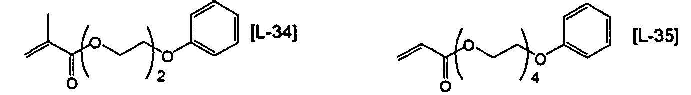

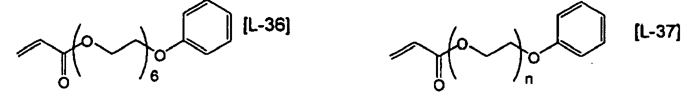

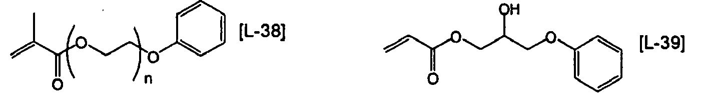

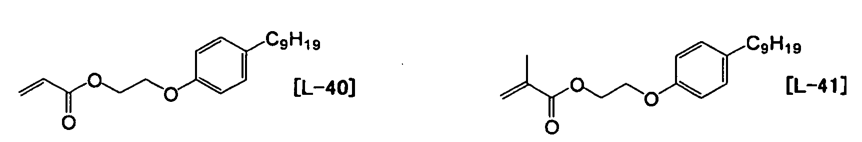

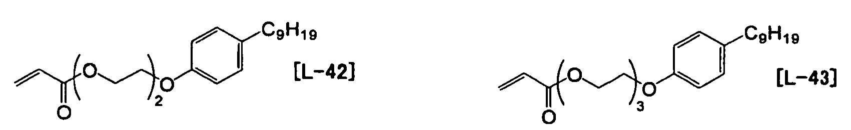

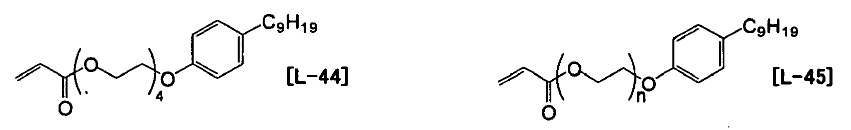

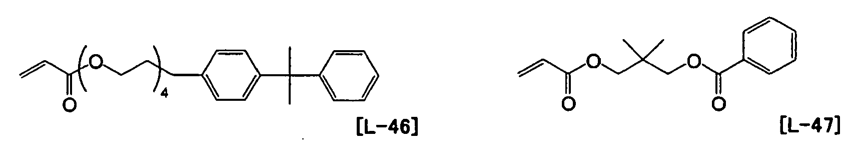

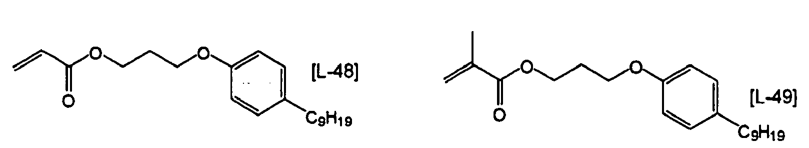

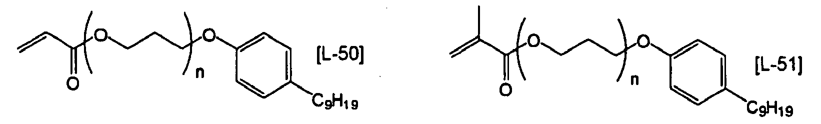

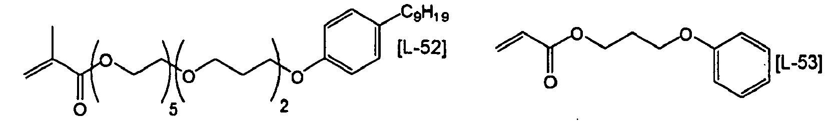

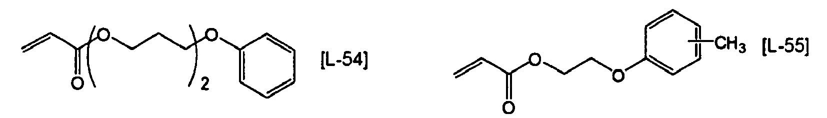

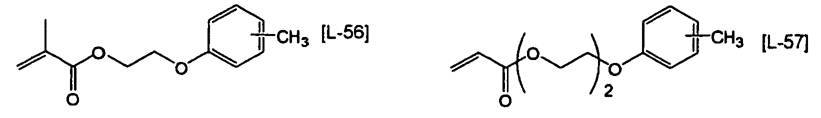

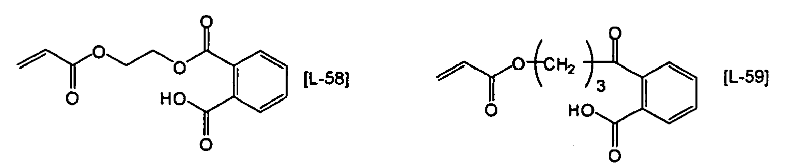

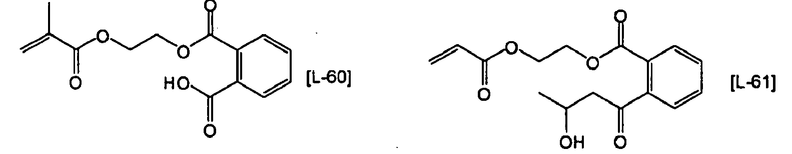

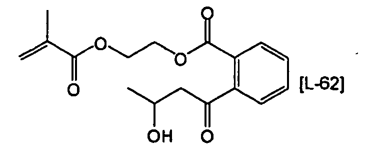

In the present invention, L-33 and L-34 are preferable.

Examples of the monomer having a cyclic hydrocarbon group that can be used in the present invention include cyclohexyl (meth)acrylate, cyclopentyl (meth)acrylate, cycloheptyl (meth)acrylate, cyclooctyl (meth)acrylate, cyclodecyl (meth)acrylate, dicyclodecyl (meth)acrylate, trimethylcyclohexyl (meth)acrylate, 4-*t*-butylcyclohexyl (meth)acrylate, 2-benzyl (meth)acrylate, phenoxyethyl (meth)acrylate, phenoxydiethylene glycol (meth)acrylate, phenoxytriethylene glycol (meth)acrylate, an ethylene oxide (hereinafter, also called 'EO') modified cresol (meth)acrylate, nonylphenoxypolyethylene glycol (meth)acrylate, neopentyl glycol benzoate (meth)acrylate, paracumylphenoxyethylene glycol (meth)acrylate, *N*-cyclohexyl (meth)acrylamide, *N*-(1,1-dimethyl-2-phenyl)ethyl(meth)acrylamide, *N*-diphenylmethyl(meth)acrylamide, 5-(meth)acryloyloxymethyl-5-ethyl-1,3-dioxacyclohexane, (poly)ethylene glycol (meth)acrylate phenyl ester, (poly)propylene glycol mono(meth)acrylate phenyl ester, 2-hydroxy-3-phenoxypropyl acrylate, 2-(meth)acryloyloxyethylphthalic acid, ethoxylated phenyl (meth)acrylate, and 2-(meth)acryloyloxyethylhexahydrophthalic acid; among them a monomer having an aromatic group such as a phenyl group is preferable, and phenoxyethyl (meth)acrylate is more preferable.

In the present invention, the monomer having a cyclic hydrocarbon group is preferably a monofunctional (meth)acrylate, more preferably a monofunctional (meth)acrylate that is a compound represented by Formula (II) or Formula (VI), and yet more preferably a monofunctional acrylate that is a compound represented by Formula (II) or Formula (VI).

The monofunctional acrylate represented by Formula (II) is preferably a compound having a norbornyl group or a compound having a dicyclopentenyl group represented by Formula (IV), and more preferably dicyclopentenyloxyethyl acrylate or isobornyl acrylate.

The monofunctional acrylate represented by Formula (VI) is preferably a compound having a phenyl group, and particularly preferably phenoxyethyl acrylate.

The content of the monomer having a cyclic hydrocarbon group is preferably no greater than 50 wt % relative to the ink composition, more preferably no greater than 40 wt %, and yet more preferably no greater than 35 wt %. It is preferable for the content to be within the above-mentioned range since the curability is excellent and the viscosity is appropriate.

### (3) Acyclic polyfunctional monomer

It is preferable to use an acyclic polyfunctional monomer in a combination with the monomer having a heterocyclic skeleton and the monomer having a cyclic hydrocarbon group. By containing an acyclic polyfunctional monomer, an ink composition that has excellent curability and gives an image having high cured coating strength is obtained.

Specific examples of the acyclic polyfunctional monomer include neopentyl glycol di(meth)acrylate, ethoxylated neopentyl glycol di(meth)acrylate, propoxylated neopentyl glycol di(meth)acrylate, 1,6-hexanediol di(meth)acrylate, 1,9-nonanediol di(meth)acrylate, 1,10-decanediol diacrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, polypropylene glycol di(meth)acrylate, pentaerythritol tri(meth)acrylate, pentaerythritol tetra(meth)acrylate, dipentaerythritol tetra(meth)acrylate, trimethylolethane tri(meth)acrylate, trimethylolpropane tri(meth)acrylate, ditrimethylolpropane tetra(meth)acrylate, tetramethylolmethane tetra(meth)acrylate, tetramethylolmethane tri(meth)acrylate, a modified glycerol tri(meth)acrylate, a modified bisphenol A di(meth)acrylate, a bisphenol A propylene oxide (hereinafter, also called 'PO') adduct di(meth)acrylate, a bisphenol A EO adduct di(meth)acrylate, dipentaerythritol hexa(meth)acrylate, a caprolactone-modified dipentaerythritol di(meth)acrylate, a caprolactone-modified dipentaerythritol hexa(meth)acrylate, (poly)tetramethylene glycol di(meth)acrylate, an EO-modified pentaerythritol triacrylate, a PO-modified pentaerythritol tri(meth)acrylate, an EO-modified pentaerythritol tetra(meth)acrylate, a PO-modified pentaerythritol tetra(meth)acrylate, an EO-modified dipentaerythritol tetra(meth)acrylate, a PO-modified dipentaerythritol tetra(meth)acrylate, an EO-modified trimethylolpropane tri(meth)acrylate, a PO-modified trimethylolpropane tri(meth)acrylate, an EO-modified tetramethylolmethane tetra(meth)acrylate, a PO-modified tetramethylolmethane tetra(meth)acrylate, neopentyl glycol hydroxypivalate di(meth)acrylate, pentaerythritol triacrylate tolylene diisocyanate urethane prepolymer, pentaerythritol triacrylate hexamethylene diisocyanate urethane prepolymer, and bisphenol A diglycidyl ether acrylic acid adduct, and among them propoxylated neopentyl glycol di(meth)acrylate and a caprolactone-modified dipentaerythritol di(meth)acrylate are preferable.

The proportion of the polyfunctional monomer in the total ink composition is preferably 0.5 to 40 wt %, and more preferably 1 to 30 wt %. It is preferable for the proportion to be within the above-mentioned range since an ink composition that has excellent curability and gives an image having a high cured coating strength is obtained.

### (4) Other monomer

In the present invention, the ink composition may employ a following radically porymerizable compound as other monomer. The combined use of a radically polymerizable compound enables an ink composition having better curability to be provided.

As the radically polymerizable compounds, photocurable materials employing a photopolymerizable composition described in JP-A-7-159983, JP-B-7-31399, JP-A-8-224982, JP-A-10-863, JP-A-9-80675, etc. are known (JP-B denotes a Japanese examined patent application publication).

The radically polymerizable compounds are compounds having at least one radically polymerizable ethylenically unsaturated bond, may be any compound as long as it has one radically polymerizable ethylenically unsaturated bond in the molecule, and include chemical configurations such as monomer, oligomer, and polymer. The radically polymerizable compounds may be used singly or may be used in a combination of two or more types at any ratio in order to improve desired properties.

Examples of the polymerizable compound having a radically polymerizable ethylenically unsaturated bond include unsaturated carboxylic acids such as acrylic acid, methacrylic acid, itaconic acid, crotonic acid, isocrotonic acid, and maleic acid, and salts thereof, anhydrides having an ethylenically unsaturated group, acrylonitrile, styrene, and various types of radically polymerizable compounds such as unsaturated polyesters, unsaturated polyethers, unsaturated polyamides, and (meth)acrylic acid esters of unsaturated urethane (meth)acrylic monomers or prepolymers, epoxy monomers or prepolymers, or urethane monomers or prepolymers.

Specific examples thereof include acyclic (meth)acrylic acid derivatives such as (poly)ethylene glycol mono(meth)acrylate, (poly)ethylene glycol (meth)acrylate methyl ester, (poly)ethylene glycol (meth)acrylate ethyl ester, (poly)propylene glycol mono(meth)acrylate, (poly)propylene glycol (meth)acrylate methyl ester, (poly)propylene glycol (meth)acrylate ethyl ester, 2-ethylhexyl (meth)acrylate, 2-ethylhexyl diglycol (meth)acrylate, methyl (meth)acrylate, *n*-buyly (meth)acrylate, *n*-octyl (meth)acrylate, *n*-nonyl (meth)acrylate, *n*-decyl (meth)acrylate, isooctyl (meth)acrylate, *n*-lauryl (meth)acrylate, *n*-tridecyl (meth)acrylate, *n*-cetyl (meth)acrylate, *n*-stearyl (meth)acrylate, 2-hydroxyethyl (meth)acrylate, 2-hydroxybutyl (meth)acrylate, butoxyethyl (meth)acrylate, origo-ester (meth)acrylate, *N*-methylol (meth)acrylamide, diacetone acrylamide, epoxy acrylate, allyl (meth)acrylate, glycidyl (meth)acrylate, dimethylaminomethyl (meth)acrylate, methoxydipropyleneglycol (meth)acrylate, and allyl compound derivatives such as allyl glycidyl ether, diallyl phthalate, triallyl trimelitate, 2-(meth)acryloyloxyethyl succinate, lactone-modified flexible (meth)acrylate, and, more specifically, commercial products, radically polymerizable or crosslinking monomers, oligomers, and polymers known in the art such as those described in 'Kakyozai Handobukku' (Crosslinking Agent Handbook), Ed. S. Yamashita (Taiseisha, 1981); 'UV·EB Koka Handobukku (Genryou Hen)' (UV·EB Curing Handbook (Starting Materials) Ed. K. Kato (Kobunshi Kankoukai, 1985); 'UV·EB Koka Gijutsu no Oyo to Shijyo' (Application and Market of UV·EB Curing Technology', p. 79, Ed. Rad Tech (CMC, 1989); and E. Takiyama 'Poriesuteru Jushi Handobukku' (Polyester Resin Handbook), (The Nikkan Kogyo Shimbun Ltd., 1988).

Furthermore, as the radically polymerizable compound, a vinyl ether compound is preferably used. Examples of vinyl ether compounds that can suitably be used include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether, and monovinyl ether compounds such as ethylene glycol monovinyl ether, triethylene glycol monovinyl ether, ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, *n*-propyl vinyl ether, isopropyl vinyl ether, isopropenyl ether, dodecyl vinyl ether, diethylene glycol monovinyl ether, octadecyl vinyl ether, hydroxyethylmonovinyl ether, and hydroxynonylmonovinyl ether.

Among these vinyl ether compounds, divinyl ether compounds and trivinyl ether compounds are preferable from the viewpoint of curability, adhesion, and surface hardness, and divinyl ether compounds are particularly preferable. The vinyl ether compounds may be used singly or in a combination of two or more types as appropriate.

In the present invention, the radically polymerizable compound may be used in combination with an oligomer or a polymer. The oligomer referred to here means a compound having a molecular weight (a weight-average molecular weight for one having a molecular weight distribution) of 2,000 or greater, and the polymer referred to here means a compound having a molecular weight (a weight-average molecular weight for one having a molecular weight distribution) of 10,000 or greater. The oligomer and the polymer optionally have a radically polymerizable group. It is preferable for the oligomer and the polymer to have no more than 4 radically polymerizable groups per molecule (an average of no more than 4 over all the molecules contained for one having a molecular weight distribution) since an ink composition having excellent flexibility can be obtained. They can suitably be used from the viewpoint of adjusting the viscosity to a level most suitable for jetting the ink.

### (5) Amount combined

In the present invention, the content of the monomer having a heterocyclic skeleton and the monomer having a cyclic hydrocarbon group is preferably 10 to 80 wt % relative to the total weight of the ink composition, more preferably 15 to 70 wt %, and yet more preferably 20 to 60 wt %. It is preferable for the content to be within the above-mentioned range since the curability and flexibility are excellent and the viscosity is appropriate.

### 3. Colorant

The ink composition of the present invention is a white ink composition for inkjet recording, and comprises a white colorant such as a white pigment.

The white colorant that can be used in the present invention is not particularly limited; pigments and oil-soluble dyes that have excellent weatherability and are rich in color reproduction are preferable, and it may be selected freely from known colorants such as soluble dyes and used. It is preferable that, as a colorant that can be used suitably in the ink composition of the present invention, from the viewpoint of sensitivity of a curing reaction by actinic radiation not being degraded, a compound that does not function as a polymerization inhibitor in a polymerization reaction, which is a curing reaction, is selected.

The pigment that can be used in the present invention is not particularly limited and, for example, organic and inorganic pigments having the numbers below in the Color Index may be used.

As a white pigment, Pigment White 1, 3, 6, 16, 18, 21, etc. may be used according to an intended application, and among them Pigment White 6 (TiO₂) may preferably be used in the present invention.

Specific examples of TiO₂ include KRONOS 1001, 1014, 1071, 1074, 1075, 1077, 1078, 1080, 1171, 2044, 2047, 2056, 2063, 2080, 2081, 2084, 2087, 2160, 2190, 2211, 2220, 2222, 2225, 2230, 2233, 2257, 2300, 2310, 2450, 2500, 3000, and 3025 manufactured by KRONOS. One type or two or more types of these colorants may be selected appropriately according to the intended application of the ink composition.

The oil-soluble dye that can be used in the present invention means a dye that is substantially insoluble in water. Specifically, the solubility in water at 25°C (the mass of dye that can be dissolved in 100 g of water) is no greater than 1 g, preferably no greater than 0.5 g, and more preferably no greater than 0.1 g. Therefore, the oil-soluble dye means a so-called water-insoluble pigment or an oil-soluble dye, and among these the oil-soluble dye is preferable.

The colorant that can be used in the present invention is preferably added to the ink composition and then dispersed in the ink composition to an appropriate degree. For dispersion of the colorant, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

The colorant may be added directly together with other components when preparing the ink composition of the present invention, but in order to improve dispersibility it may be added in advance to a solvent or a monomer used in the present invention, thus giving a uniform dispersion or solution.

In the present invention, in order to avoid the problems of the solvent resistance being degraded when solvent remains in the cured image and residual solvent VOC (Volatile Organic Compound), it is preferable to add the colorant in advance to a dispersion medium such as a monomer. When considering only the viewpoint of dispersion suitability, it is preferable to select the monomer having the lowest viscosity.

When a colorant such as a pigment that is present as a solid in the ink composition of the present invention is used, it is preferable for the colorant, the dispersant, the dispersion medium, dispersion conditions, and filtration conditions to be set so that the average particle size of colorant particles is preferably 0.005 to 0.5 µm, more preferably 0.01 to 0.45 µm, and yet more preferably 0.015 to 0.4 µm. By such control of particle size, clogging of a head nozzle can be suppressed, and the storage stability of the ink composition and the curing sensitivity can be maintained.

The content of the colorant in the ink composition of the present invention is preferably 0.01 to 30 wt % relative to the total weight of the ink composition, more preferably 5 to 25 wt %, and yet more preferably 10 to 20 wt %.

### 4. Dispersant

It is preferable to add a dispersant when dispersing the colorant. The type of dispersant is not particularly limited, but it is preferable to use a polymeric dispersant.

Examples of the polymeric dispersant include polymeric dispersants such as DisperBYK-101, DisperBYK-102, DisperBYK-103, DisperBYK-106, DisperBYK-111, DisperBYK-161, DisperBYK-162, DisperBYK-163, DisperBYK-164, DisperBYK-166, DisperBYK-167, DisperBYK-168, DisperBYK-170, DisperBYK-171, DisperBYK-174, and DisperBYK-182 (all manufactured by BYK Chemie), EFKA4010, EFKA4046, EFKA4080, EFKA5010, EFKA5207, EFKA5244, EFKA6745, EFKA6750, EFKA7414, EFKA7462, EFKA7500, EFKA7570, EFKA7575, and EFKA7580 (all manufactured by EFKA Additives), Disperse Aid 6, Disperse Aid 8, Disperse Aid 15, and Disperse Aid 9100 (manufactured by San Nopco Limited); various types of Solsperse dispersants such as Solsperse 3000, 5000, 9000, 12000, 13240, 13940, 17000, 24000, 26000, 28000, 32000, 36000, 39000, 41000, and 71000 (manufactured by Lubrizol); Adeka Pluronic L31, F38, L42, L44, L61, L64, F68, L72, P95, F77, P84, F87, P94, L101, P103, F108, L121, and P-123 (manufactured by Adeka Corporation), Isonet S-20 (manufactured by Sanyo Chemical Industries, Ltd.), and Disparlon KS-860, 873SN, and 874 (polymeric dispersant), #2150 (aliphatic poly carboxylic acid), and #7004 (polyether ester type) (manufactured by Kusumoto Chemicals, Ltd.).

It is also possible to use in combination a pigment derivative such as a phthalocyanine derivative (product name: EFKA-745 (manufactured by EFKA)), or Solsperse 5000, 12000, or 22000 (manufactured by Lubrizol).

The content of the dispersant in the ink composition of the present invention is preferably 0.01 to 5 wt % relative to the weight of the entire ink composition.

### 5. Surfactant

It is preferable to add a surfactant to the ink composition of the present invention in order to impart long-term discharge stability.

As the surfactant, those described in JP-A-62-173463 and JP-A-62-183457 can be cited. Examples thereof include anionic surfactants such as dialkylsulfosuccinic acid salts, alkylnaphthalenesulfonic acid salts, and fatty acid salts, nonionic surfactants such as polyoxyethylene alkyl ethers, polyoxyethylene alkyl allyl ethers, acetylene glycols, and polyoxyethylene/polyoxypropylene block copolymers, and cationic surfactants such as alkylamine salts and quaternary ammonium salts. An organofluoro compound or a polysiloxane compound may be used as the above-mentioned surfactant. The organofluoro compound is preferably hydrophobic. Examples of the organofluoro compound include fluorine-based surfactants, oil-like fluorine-based compounds (e.g. fluorine oils), solid fluorine compound resins (e.g. tetrafluoroethylene resin), and those described in JP-B-57-9053 (columns 8 to 17) and JP-A-62-135826. As the polysiloxane compound, a modified polysiloxane compound in which an organic group is introduced into some methyl groups of dimethyl polysiloxane is preferable. Modification examples include polyether-modified, methylstyrene-modified, alcohol-modified, alkyl-modified, aralkyl-modified, fatty acid ester-modified, epoxy-modified, amine-modified, amino-modified, and mercapto-modified, but are not limited thereto. These methods for modification may be used in combination. Among them, polyether-modified polysiloxane compounds are preferable from the viewpoint of improvement in inkjet discharge stability. Examples of the polyether-modified polysiloxane compounds include SILWET L-7604, SILWET L-7607N, SILWET FZ-2104, and SILWET FZ-2161 (manufactured by Nippon Unicar Co., Ltd.), BYK-306, BYK-307, BYK-331, BYK-333, BYK-347, and BYK-348 (manufactured by BYK Chemie), and KF-351A, KF-352A, KF-353, KF-354L, KF-355A, KF-615A, KF-945, KF-640, KF-642, KF-643, KF-6020, X-22-6191, X-22-4515, KF-6011, KF-6012, KF-6015, and KF-6017 (manufactured by Shin-Etsu Chemical Co., Ltd.).

The content of the surfactant in the ink composition of the present invention is preferably 0.0001 to 1 wt % relative to the weight of the entire ink composition. Furthermore, these surfactants may be contained singly, or in a combination of two or more types of polysiloxane compounds.

### 6. Other Component

The ink composition of the present invention may comprise another component as necessary. Examples of the other component include a polymerization inhibitor, a sensitizer, a cosensitizer, a cationic polymerizable compound, a cationic polymerization initiator, a UV absorber, an antioxidant, an antifading agent, a conductive salt, a solvent, a polymer compound, and a basic compound.

### Polymerization inhibitor

The ink composition of the present invention may comprise a polymerization inhibitor in order to suppress undesirable radical polymerization during storage. Examples of the polymerization inhibitor include a compound selected from the group consisting of a phenolic hydroxy group-containing compound, a quinone, an *N*-oxide compound, a piperidin-1-oxyl free radical compound, a pyrrolidin-1-oxyl free radical compound, an *N*-nitrosophenylhydroxylamine, and a cationic dye.

Specific examples of the polymerization inhibitor include hydroquinone, *p*-methoxyphenol, di-*t*-butyl-*p*-cresol, pyrogallol, resorcinol, catechol, *t*-butylcatechol, hydroquinone, benzoquinone, 4,4-thiobis(3-methyl-6-*t*-butylphenol), 2,2'-methylenebis(4-methyl-6-*t*-butylphenol), 2,2,6,6-tetramethylpiperidine and derivatives thereof, di-*t*-butylnitroxide, 2,2,6,6-tetramethylpiperidine-*N*-oxide and derivatives thereof, piperidin-1-oxyl free radical, 2,2,6,6-tetramethylpiperidin-1-oxyl free radical, 4-oxo-2,2,6,6-tetramethylpiperidin-1-oxyl free radical, 4-hydroxy-2,2,6,6-tetramethylpiperidin-1-oxyl free radical, 4-acetamido-2,2,6,6-tetramethylpiperidin-1-oxyl free radical, 4-maleimido-2,2,6,6-tetramethylpiperidin-1-oxyl free radical, 4-phosphonoxy-2,2,6,6-tetramethylpiperidin-1-oxyl free radical, 3-carboxy-2,2,5,5-tetramethylpyrrolidin-1-oxyl free radical, N-nitrosophenylhydroxylamine cerium (III) salt, *N*-nitrosophenylhydroxylamine aluminum salt, Crystal Violet, Methyl Violet, Ethyl Violet, and Victoria Pure Blue BOH.

The content of the polymerization inhibitor relative to the ink composition is preferably 0.0001 to 1 wt %, more preferably 0.001 to 0.5 wt %, and yet more preferably 0.001 to 0.3 wt %. It is preferable for the content to be within the above-mentioned range of values since polymerization can be suppressed when preparing an ink composition, and clogging of an inkjet nozzle can be prevented.

### Sensitizer

The ink composition of the present invention may contain a sensitizer in order to promote decomposition of the above-mentioned polymerization initiator by absorbing specific actinic radiation, in particular when used for inkjet recording. The sensitizer absorbs specific actinic radiation and attains an electronically excited state. The sensitizer in the electronically excited state causes actions such as electron transfer, energy transfer, or heat generation upon contact with the polymerization initiator. This causes the polymerization initiator to undergo a chemical change and decompose, thus forming a radical, an acid, or a base.

Preferred examples of the sensitizer include those that belong to compounds below and have an adsorption wavelength in the region of 350 nm to 450 nm.

Polynuclear aromatic compounds (e.g. pyrene, perylene, triphenylene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), and coumarins (e.g. 7-diethylamino-4-methylcoumarin).

Preferred specific examples of the sensitizer that can be used in the present invention include sensitizers (E-1) to (E-20) described in JP-A-2007-231233.

The content of the sensitizing colorant in the ink composition of the present invention is appropriately selected according to the intended purpose, but it is generally preferably 0.05 to 4 wt % relative to the weight of the entire ink composition.

### Cosensitizer

The ink composition of the present invention preferably comprises a cosensitizer. In the present invention, the cosensitizer has the function of further improving the sensitivity of the sensitizer to actinic radiation or the function of suppressing inhibition by oxygen of polymerization of a polymerizable compound, etc.

Examples of such a cosensitizer include amines such as compounds described in M. R. Sander et al., 'Journal of Polymer Society', Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure No. 33825, and specific examples thereof include triethanolamine, ethyl *p*-dimethylaminobenzoate, *p*-formyldimethylaniline, and p-methylthiodimethylaniline.

Other examples of the cosensitizer include thiols and sulfides such as thiol compounds described in JP-A-53-702, JP-B-55-500806, and JP-A-5-142772, and disulfide compounds of JP-A-56-75643, and specific examples thereof include 2-mercaptobenzothiazole, 2-mercaptobenzoxazole, 2-mercaptobenzimidazole, 2-mercapto-4(3H)-quinazoline, and β-mercaptonaphthalene.

Yet other examples of the cosensitizer include amino acid compounds (e.g. *N*-phenylglycine, etc.), organometallic compounds described in JP-B-48-42965 (e.g. tributyltin acetate, etc.), hydrogen-donating compounds described in JP-B-55-34414, sulfur compounds described in JP-A-6-308727 (e.g. trithiane, etc.), phosphorus compounds described in JP-A-6-250387 (diethylphosphite, etc.), and Si-H or Ge-H compounds described in JP-A-8-54735.

The content of the cosensitizer in the ink composition of the present invention is appropriately selected according to the intended purpose, but it is preferably 0.05 to 4 wt % relative to the weight of the entire ink composition.

### Cationic polymerizable compound

The ink composition of the present invention may comprise in combination as necessary a cationic polymerizable compound as another polymerizable compound. When a cationic polymerizable compound is used in combination, it is preferable to use a cationic polymerization initiator in combination as a polymerization initiator.

The cationically polymerizable compound used in the present invention is not particularly limited as long as it is a compound that undergoes a polymerization reaction by virtue of an acid generated by the photo-acid generator and is cured, and various types of cationically polymerizable monomers known as photo-cationically polymerizable monomers may be used. Examples of the cationically polymerizable monomer include epoxy compounds, vinyl ether compounds, oxetane compounds described in JP-A-6-9714, JP-A-2001-31892, JP-A-2001-40068, JP-A-2001-55507, JP-A-2001-310938, JP-A-2001-310937, JP-A-2001-220526, etc.

As the cationically polymerizable compound, for example, a cationically polymerizable type photocuring resin is known, and in recent years cationically photopolymerizable type photocuring resins sensitized to a visible light wavelength region of 400 nm or longer have been disclosed in, for example, JP-A-6-43633 and JP-A-8-324137. They may also be applied to the ink composition of the present invention.

### Cationic Polymerization initiator

The ink composition of the present invention may comprise in combination as necessary a cationic polymerizable compound as another polymerizable compound. When a cationic polymerizable compound is used in combination, it is preferable to use a cationic polymerization initiator in combination as a polymerization initiator.

Firstly, B(C₆F₅)₄⁻, PF₆⁻, AsF₆⁻, SbF₆⁻, and CF₃SO₃⁻ salts of diazonium, ammonium, iodonium, sulfonium, phosphonium, etc. aromatic onium compounds can be cited as a cationic polymerization initiator which can be used in the present invention. Secondly, sulfonated materials that generate a sulfonic acid can be cited. Thirdly, halides that photogenerate a hydrogen halide can also be used. Fourthly, iron arene complexes can be cited.

Preferred specific examples of the cationic polymerization initiator that can be used in the present invention include compounds (b-1) to (b-96) described in JP-A-2007-224149.

### UV absorber

A UV absorber may be used from the viewpoint of improving the weather resistance of an image obtained and preventing discoloration.

The UV absorbers include benzotriazole compounds described in JP-A-58-185677, JP-A-61-190537, JP-A-2-782, JP-A-5-197075 and JP-A-9-34057; benzophenone compounds described in JP-A-46-2784, JP-A-5-194483 and US Pat. No. 3,214,463; cinnamic acid compounds described in JP-B-48-30492, JP-B-56-21141 and JP-A-10-88106; triazine compounds described in JP-A-4-298503, JP-A-8-53427, JP-A-8-239368, JP-A-10-182621 and JP-W-8-501291 (the term "JP-W" as used herein means an unexamined published international patent application); compounds described in Research Disclosure No. 24239; and compounds represented by stilbene and benzoxazole compounds, which absorb ultraviolet rays to emit fluorescence, the so-called fluorescent brightening agents.

The amount thereof added is appropriately selected according to the intended application, and it is generally on the order of 0.5 to 15 wt % on the basis of the solids content in the ink composition.

### Antioxidant

In order to improve the stability of the ink composition, an antioxidant may be added. Examples of the antioxidant include those described in Laid-open European Patent Nos. 223739, 309401, 309402, 310551, 310552, and 459416, Laid-open German Patent No. 3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and US Pat. Nos. 4,814,262 and 4,980,275.

The amount thereof added is appropriately selected according to the intended application, and it is preferably on the order of 0.1 to 8 wt % on the basis of the solids content in the ink composition.

### Antifading agent

The ink composition of the present invention may employ various organic and metal complex antifading agents. The organic antifading agents include hydroquinones, alkoxyphenols, dialkoxyphenols, phenols, anilines, amines, indanes, chromans, alkoxyanilines, and heterocycles. The metal complex antifading agents include nickel complexes and zinc complexes, more specifically, there can be used compounds described in patents cited in Research Disclosure, No. 17643, Items VII-I to J, ibid., No.15162, ibid., No.18716, page 650, left-hand column, ibid., No. 36544, page 527, ibid., No. 307105, page 872, and ibid., No. 15162, and compounds contained in general formulae and compound examples of typical compounds described in JP-A-62-21572, pages 127 to 137.

The amount thereof added is appropriately selected according to the intended application, and it is preferably on the order of 0.1 to 8 wt % on the basis of the solids content in the ink composition.

### Conductive salt

The ink composition of the present invention may contain, for the purpose of controlling discharge properties, a conductive salt such as potassium thiocyanate, lithium nitrate, ammonium thiocyanate, or dimethylamine hydrochloride.

### Solvent

It is also effective to add a trace amount of organic solvent to the ink composition of the present invention in order to improve the adhesion to a recording medium.

With regard to the solvent that can be used in the ink composition of the present invention, when a resin is used in the internal structure of the polymerizable particles, it is preferable for a difference in the solubility parameter value (SP value) between the resin and the solvent used to be 2 or greater, and more preferably 3 or greater.

Examples of the solvent include ketone-based solvents such as acetone, methyl ethyl ketone, and diethyl ketone, alcohol-based solvents such as methanol, ethanol, 2-propanol, 1-propanol, 1-butanol, and tert-butanol, chlorine-based solvents such as chloroform and methylene chloride, aromatic-based solvents such as benzene and toluene, ester-based solvents such as ethyl acetate, butyl acetate, and isopropyl acetate, ether-based solvents such as diethyl ether, tetrahydrofuran, and dioxane, and glycol ether-based solvents such as ethylene glycol monomethyl ether and ethylene glycol dimethyl ether.

In this case, it is effective if the amount thereof added is in a range that does not cause problems with the solvent resistance or the VOC, and the amount is preferably in the range of 0.1 to 5 wt % relative to the total amount of the ink composition, and more preferably 0.1 to 3 wt %.

### High molecular weight compound

The ink composition in the present invention may contain various types of high molecular weight compounds in order to adjust film physical properties. Examples of the high molecular weight compounds include acrylic polymers, polyvinylbutyral resins, polyurethane resins, polyamide resins, polyester resins, epoxy resins, phenol resins, polycarbonate resins, polyvinylbutyral resins, polyvinylformal resins, shellac, vinylic resins, acrylic resins, rubber-based resins, waxes, and other natural resins. They may be used in a combination of two or more types. Among these, a vinylic copolymer obtained by copolymerization of an acrylic monomer is preferable. Furthermore, as a copolymer component of the high molecular weight compound, a copolymer containing as a structural unit a 'carboxyl group-containing monomer', an 'alkyl methacrylate ester', or an 'alkyl acrylate ester' may preferably be used.

### Basic compound

It is preferable to add the basic compound from the viewpoint of improving the storage stability of the ink composition. As the basic compound that can be used in the present invention, a known basic compound may be used and, for example, a basic inorganic compound such as an inorganic salt or a basic organic compound such as an amine is preferably used.

In addition to the above, the ink composition may contain as necessary, for example, a leveling additive, a matting agent, a wax for adjusting film physical properties, or a tackifier in order to improve the adhesion to a recording medium such as polyolefin or PET, the tackifier not inhibiting polymerization.

Specific examples of the tackifier include high molecular weight tacky polymers described on pp. 5 and 6 of JP-A-2001-49200 (e.g. a copolymer formed from an ester of (meth)acrylic acid and an alcohol having an alkyl group with 1 to 20 carbons, an ester of (meth)acrylic acid and an alicyclic alcohol having 3 to 14 carbons, or an ester of (meth)acrylic acid and an aromatic alcohol having 6 to 14 carbons), and a low molecular weight tackifying resin having a polymerizable unsaturated bond.

### 7. Properties of ink composition

In the present invention, the ink composition preferably has a viscosity at 25°C of no more than 40 mPa·s, more preferably 5 to 40 mPa·s, and yet more preferably 7 to 30 mPa·s.

Furthermore, the viscosity of the ink composition at the discharge temperature (e.g. 25°C to 80°C, and preferably 25°C to 50°C) is preferably 3 to 15 mPa·s, and more preferably 3 to 13 mPa·s. With regard to the ink composition of the present invention, it is preferable that its component ratio is appropriately adjusted so that the viscosity is in the above-mentioned range. When the viscosity at room temperature is set to be high, even when a porous recording medium is used, penetration of the ink into the recording medium can be prevented, uncured monomer can be reduced. Furthermore, ink spreading when ink droplets have landed can be suppressed, and as a result there is the advantage that the image quality is improved.

The surface tension of the ink composition of the present invention at 25°C is preferably 20 to 35 mN/m, and yet more preferably 23 to 33 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 35 mN/m.

### 8. Inkjet recording method and printed material

The ink composition of the present invention is used for inkjet recording.

The inkjet recording method of the present invention is a method in which the white ink composition for inkjet recording of the present invention is discharged onto a recording medium (support, recording material, etc.), and the ink composition discharged onto the recording medium is irradiated with actinic radiation to thus cure the ink composition, thereby forming an image.

The inkjet recording method of the present invention comprises (a¹) a step of discharging the white ink composition for inkjet recording of the present invention, and (b¹) a step of curing the white ink composition by irradiating the discharged white ink composition with actinic radiation.

Furthermore, the printed material of the present invention is formed by the inkjet recording method of the present invention.

The step (a¹) of the inkjet recording method of the present invention may employ an inkjet recording device that will be described in detail below.

In the present invention, an inkjet recording device used in the inkjet recording method is not particularly limited, and any known inkjet recording device that can achieve an intended resolution may be used. That is, any known inkjet recording device, such as a commercial product, may be used in order to discharge an ink onto a recording medium in step (a¹) of the inkjet recording method of the present invention.

The inkjet recording device that can be used in the present invention is equipped with, for example, an ink supply system, a temperature sensor, and an actinic radiation source.

The ink supply comprises, for example, a main tank containing the ink composition of the present invention, a supply pipe, an ink supply tank immediately before an inkjet head, a filter, and a piezo system inkjet head. The piezo system inkjet head may be driven so as to discharge a multisize dot of 1 to 100 pL, and preferably 8 to 30 pL, at a resolution of 320 x 320 to 4,000 x 4,000dpi, preferably 400 x 400 to 1,600 x 1,600dpi, and more preferably 720 x 720 dpi. Here, dpi referred to in the present invention means the number of dots per 2.54 cm.

As described above, since it is desirable for the radiation curing type ink to be discharged at a constant temperature, a section from the ink supply tank to the inkjet head is thermally insulated and heated. A method of controlling temperature is not particularly limited, but it is preferable to provide, for example, temperature sensors at a plurality of pipe section positions, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition of the present invention is discharged using the above mentioned inkjet recording device, the ink composition is preferably discharged after being heated to preferably 25°C to 80°C, and more preferably 25°C to 50°C, so as to reduce the viscosity of the ink composition to preferably 3 to 15 mPa·s, and more preferably 3 to 13 mPa·s. In particular, it is preferable to use the ink composition having an ink viscosity at 25°C of no more than 15 mPa·s since a good discharge stability can be obtained. By employing this method, high discharge stability can be realized.

The radiation curing type ink composition such as the ink composition of the present invention generally has a viscosity that is higher than that of a normal ink composition or a water-based ink used for an inkjet recording ink, and variation in viscosity due to a change in temperature at the time of discharge is large. Viscosity variation in the ink has a large effect on changes in liquid droplet size and changes in liquid droplet discharge speed and, consequently, causes the image quality to be degraded. It is therefore necessary to maintain the ink discharge temperature as constant as possible. In the present invention, the control range for the temperature is desirably ±5°C of a set temperature, preferably ±2°C of the set temperature, and more preferably ±1°C of the set temperature.

The step (b¹) of curing the discharged ink composition by irradiating the ink composition with actinic radiation is now explained.

The ink composition discharged onto the recording medium cures upon exposure to actinic radiation. This is due to an initiating species such as a radical, an acid, or a base being generated by decomposition of the polymerization initiator contained in the ink composition of the present invention by irradiation with actinic radiation, the initiating species functioning so as to make a polymerization reaction of a radically polymerizable compound take place and to promote it. In this process, if a sensitizer is present together with the polymerization initiator in the ink composition, the sensitizer in the system absorbs actinic radiation, becomes excited, and promotes decomposition of the polymerization initiator by contact with the polymerization initiator, thus enabling a curing reaction with higher sensitivity to be achieved.

The actinic radiation used in this process may include α rays, γ rays, an electron beam, X rays, UV rays, visible light, and IR rays. Although it depends on the absorption characteristics of the sensitizer, the peak wavelength of the actinic radiation is, for example, 200 to 600 nm, preferably 300 to 450 nm, and more preferably 350 to 420 nm.

Furthermore, the polymerization initiation system of the ink composition of the present invention has sufficient sensitivity for low output actinic radiation. The actinic radiation is applied therefore so that the illumination intensity on the exposed surface is, for example, 10 to 4,000 mW/cm², and preferably 20 to 2,500 mW/cm².

As an actinic radiation source, a mercury lamp, a gas/solid laser, etc. are mainly used, and for UV photocuring inkjet a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses an LED that can emit actinic radiation whose wavelength is centered between 300 nm and 370 nm. Furthermore, another violet LED is available, and irradiation can be carried out with radiation of a different UV bandwidth. The actinic radiation source particularly preferable in the present invention is a UV-LED, and a UV-LED having a peak wavelength at 350 to 420 nm is particularly preferable.

The maximum illumination intensity of the LED on a recording medium is preferably 10 to 2,000 mW/cm², more preferably 20 to 1,000 mW/cm², and particularly preferably 50 to 800 mJ/cm².

The ink composition of the present invention is desirably exposed to such actinic radiation for, for example, 0.01 to 120 sec., and preferably 0.1 to 90 sec.

Irradiation conditions and a basic method for irradiation with actinic radiation are disclosed in JP-A-60-132767. Specifically, a light source is provided on either side of a head unit that includes an ink discharge device, and the head unit and the light source are made to scan by a so-called shuttle system. Irradiation with actinic radiation is carried out after a certain time (e.g. 0.01 to 0.5 sec., preferably 0.01 to 0.3 sec., and more preferably 0.01 to 0.15 sec.) has elapsed from when the ink has landed. By controlling the time from ink landing to irradiation so as to be a minimum in this way, it becomes possible to prevent the ink that has landed on a recording medium from spreading before being cured. Furthermore, since the ink can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light.

By employing such a recording method, it is possible to maintain a uniform dot diameter for landed ink even for various types of recording media having different surface wettability, thereby improving the image quality.

### Recording Medium

In the present invention, examples of materials forming the recording medium include paper, paper laminated with a plastic (e.g. polyethylene, polypropylene, polystyrene, etc.), a metal sheet (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, etc.), and paper or plastic film on which the above-mentioned metal is laminated or vapor-deposited. Preferred examples of the support include a polyester film and aluminum sheet.

Since the white ink composition for inkjet recording of the present invention has excellent curability, and coloration over time is suppressed even in high temperature and high humidity environments, it can suitably be used as an undercoat liquid for an image with a white background.

In accordance with the present invention, there can be provided a white ink composition for inkjet recording having excellent curability upon exposure to actinic radiation and having suppressed coloration over time even in a high temperature and high humidity environment, an inkjet recording method employing the white ink composition for inkjet recording, and a printed material formed by the inkjet recording method.

### Examples

The present invention is explained in further detail by reference to Examples and Comparative Examples. However, the present invention should not be construed as being limited to these Examples. 'Parts' described below means 'parts by weight' unless otherwise specified.

Materials used in the present invention are as follows.

### Pigment

KRONOS 2300 (white pigment, KRONOS)

### Monomers

FANCRYL FA-512A (Hitachi Chemical Co., Ltd.)
Light-Acrylate IB-XA (isobornyl acrylate, Kyoeisha Chemical Co., Ltd.)
Light-Acrylate THF-A (tetrahydrofurfuryl acrylate, Kyoeisha Chemical Co., Ltd.)
ACMO (acryloylmorpholine, Kohjin Co., Ltd.)
Aronix TO-1428 (imide-acrylate, Toagosei Co., Ltd.)
*N*-Vinylcaprolactam (NVC, Aldrich)
Actilane 421 (propoxylated neopentyl glycol diacrylate, Akcros)
KAYARAD DPCA-60 (DPCA, caprolactone-modified dipentaerythritol hexaacrylate, Nippon Kayaku Co., Ltd.)
NK ester AMP-10G (PEA, phenoxyethyl acrylate, Shin-Nakamura Chemical Co., Ltd.)

### Polymerization inhibitors

FIRSTCURE ST-1 (nitroso-based polymerization inhibitor 10 wt % solution, ChemFirst) TINUVIN 770 DF (HALS-based polymerization inhibitor, Ciba Specialty Chemicals (hereinafter, called CSC))
TINUVIN 292 (HALS-based polymerization inhibitor, CSC)

### Polymerization initiators

Lucirin TPO (photoinitiator, BASF)
IRGACURE 184 (photoinitiator, CSC)

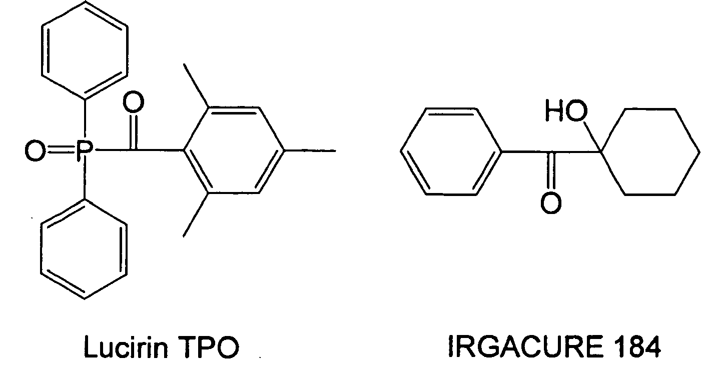

### Other additives

Solsperse 32000 (dispersant, Noveon)
BYK-307 (surfactant, BYK Chemie)
KF-353 (silicone-based surfactant, Shin-Etsu Chemical Co., Ltd.)

### Preparation of white mill base E

500 parts by weight of KRONOS 2300, 400 parts by weight of Actilane 421 (acrylate monomer manufactured by Akcros), and 100 parts by weight of Solsperse 32000 were mixed by stirring to give a pigment ink. Preparation of a pigment mill base was carried out by putting the pigment ink into an M50 disperser motor mill (manufactured by Eiger) and using zirconia beads having a diameter of 0.65 mm at a peripheral speed of 9 m/s for 4 hours.

### Example 1

The components below were stirred using a high-speed water-cooled stirred, thus giving a white color UV inkjet ink.

### White color ink composition

| | |
|---|---|
| White mill base E | 30 parts |
| N-Vinylcaprolactam | 25.1 parts |
| FANCRYL FA-512A | 24.2 parts |
| NK ESTER AMP-10G | 5.0 parts |
| KAYARAD DPCA-60 | 2 parts |
| Lucirin TPO | 13 parts |
| BYK-307 | 0.5 parts |
| FIRSTCURE ST-1 | 0.1 parts |
| TINUVIN 770 DF | 0.1 parts |

### Ink evaluation

The curability, and color measurement of a cured coating, were evaluated using the ink composition thus obtained. The evaluation methods are explained in detail below.

### Inkjet image recording method

Subsequently, recording was carried out on a recording medium using an experimental inkjet recording device having a piezo system inkjet nozzle. The ink supply system comprised a main tank, a supply pipe, an ink supply tank immediately before an inkjet head, a filter, and a piezo system inkjet head, and a section from the ink supply tank to the inkjet head was thermally insulated and heated. Temperature sensors were provided on the ink supply tank and in the vicinity of the nozzle of the inkjet head, and the temperature was controlled so that the nozzle section was always at 45°C ±2°C. The piezo system inkjet head was driven so as to discharge multisize dots of 8 to 30 pL at a resolution of 720 x 720 dpi. The exposure system, the main scanning speed, and the discharge frequency were adjusted so that, after landing, UV light was focused to give an exposure area illumination intensity of 1,630 mW/cm², and irradiation started 0.1 sec. after the ink landed on the recording medium. The cumulative amount of light applied to an image was adjusted so as to be 1,500 mJ/cm². The UV lamp employed a HAN250NL high-cure mercury lamp (manufactured by GS Yuasa Corporation). Here, dpi referred to in the present invention denotes the number of dots per 2.54 cm. The recording medium employed an E5000 ester film (film thickness 125 µm, manufactured by Toyobo Co., Ltd.).

### Method for measuring curing sensitivity

In accordance with the above-mentioned inkjet recording method, a solid printed image having an average film thickness of 12 µm was formed, and the stickiness of the image was evaluated by touch after the image was irradiated with ultraviolet rays.

The curing sensitivity was evaluated using the following criteria.
3: No stickiness on image.
2: Image was slightly sticky.
1: Not hardened, to the extent that uncured ink was transferred to the hand.

### Method for evaluating color of coating

As a method for evaluating the color of a coating, a solid image having an average coating thickness of 12 µm was printed in accordance with the inkjet recording method, and the color of the coating was evaluated using (1) the coating immediately after curing and (2) a coating stored at 60°C (humidity 60%) for 1 week in a thermostatted room. With regard to the method for evaluating the color of a coating, color solid (color space) L*a*b* was measured using an X-Rite 938 spectrodensitometer (Nippon Lithograph, Inc.), and a b* value was defined as the color of the coating (the larger the value b*, the more yellow it appears). The evaluation results are given in Table 1.

### Example 2

The components below were stirred using a high-speed water-cooled stirred, thus giving a white color UV inkjet ink.

### White color ink composition

| | |
|---|---|
| White mill base E | 30 parts |
| N-Vinylcaprolactam | 20.1 parts |
| Llght-Acrylate THF-A | 34.2 parts |
| KAYARAD DPCA-60 | 2 parts |
| Lucirin TPO | 13 parts |
| BYK-307 | 0.5 parts |
| FIRSTCURE ST-1 | 0.1 parts |
| TINUVIN 770 DF | 0.1 parts |

### Evaluation of ink composition

Evaluation was carried out in the same manner as in Example 2 using the ink composition thus obtained. The evaluation results are given in Table 1.

### Example 3

The components below were stirred using a high-speed water-cooled stirred, thus giving a white color UV inkjet ink.

### White color ink composition

| | |
|---|---|
| White mill base E | 30 parts |
| N-Vinylcaprolactam | 20.1 parts |
| Llght-Acrylate IB-XA | 29.2 parts |
| NK ESTER AMP-10G | 5.0 parts |
| KAYARAD DPCA-60 | 2 parts |
| Lucirin TPO | 13 parts |
| BYK-307 | 0.5 parts |
| FIRSTCURE ST-1 | 0.1 parts |
| TINUVIN 770 DF | 0.1 parts |

### Evaluation of ink composition

Evaluation was carried out in the same manner as in Example 3 using the ink composition thus obtained. The evaluation results are given in Table 1.

### Example 4

The components below were stirred using a high-speed water-cooled stirred, thus giving a white color UV inkjet ink.

### White color ink composition

| | |
|---|---|
| White mill base E | 30 parts |
| N-Vinylcaprolactam | 20.1 parts |
| ACMO | 14.2 parts |
| NK ESTER AMP-10G | 20.0 parts |
| KAYARAD DPCA-60 | 2 parts |
| Lucirin TPO | 13 parts |
| BYK-307 | 0.5 parts |
| FIRSTCURE ST-1 | 0.1 parts |
| TINUVIN 770 DF | 0.1 parts |

### Evaluation of ink composition

Evaluation was carried out in the same manner as in Example 4 using the ink composition thus obtained. The evaluation results are given in Table 1.

### Example 5

The components below were stirred using a high-speed water-cooled stirred, thus giving a white color UV inkjet ink.

### White color ink composition

| | |
|---|---|
| White mill base E | 30 parts |
| N-Vinylcaprolactam | 25.1 parts |
| Aronix TO-1428 | 4.2 parts |
| NK ESTER AMP-10G | 25.0 parts |
| KAYARAD DPCA-60 | 2 parts |
| Lucirin TPO | 13 parts |
| BYK-307 | 0.5 parts |
| FIRSTCURE ST-1 | 0.1 parts |

### Evaluation of ink composition

Evaluation was carried out in the same manner as in Example 5 using the ink composition thus obtained. The evaluation results are given in Table 1.

### Comparative Example 1

The components below were stirred using a high-speed water-cooled stirred, thus giving a white color UV inkjet ink.

### White color ink composition

| | |
|---|---|
| White mill base E | 30 parts |
| N-Vinylcaprolactam | 25.1 parts |
| FANCRYL FA-512A | 24.2 parts |
| NK ESTER AMP-10G | 9.0 parts |
| KAYARAD DPCA-60 | 2 parts |
| Lucirin TPO | 9 parts |
| BYK-307 | 0.5 parts |
| FIRSTCURE ST-1 | 0.1 parts |
| TINUVIN 770 DF | 0.1 parts |

### Evaluation of ink composition

Evaluation was carried out in the same manner as in Comparative Example 1 using the ink composition thus obtained. The evaluation results are given in Table 1.

### Comparative Example 2

The components below were stirred using a high-speed water-cooled stirred, thus giving a white color UV inkjet ink.

### White color ink composition

| | |
|---|---|
| White mill base E | 30 parts |
| N-Vinylcaprolactam | 25.1 parts |
| FANCRYL FA-512A | 24.2 parts |
| NK ESTER AMP-10G | 5.0 parts |
| KAYARAD DPCA-60 | 2 parts |
| IRGACURE 184 | 4 parts |
| Lucirin TPO | 9 parts |
| BYK-307 | 0.5 parts |
| FIRSTCURE ST-1 | 0.1 parts |
| TINUVIN 770 DF | 0.1 parts |

### Evaluation of ink composition

Evaluation was carried out in the same manner as in Comparative Example 2 using the ink composition thus obtained. The evaluation results are given in Table 1.

### Comparative Example 3

The components below were stirred using a high-speed water-cooled stirred, thus giving a white color UV inkjet ink.

### White color ink composition

| | |
|---|---|
| White mill base E | 30 parts |
| FANCRYL FA-512A | 38.2 parts |
| NK ESTER AMP-10G | 20.1 parts |
| KAYARAD DPCA-60 | 2 parts |
| Lucirin TPO | 9 parts |
| BYK-307 | 0.5 parts |
| FIRSTCURE ST-1 | 0.1 parts |
| TINUVIN 770 DF | 0.1 parts |

### Evaluation of ink composition

Evaluation was carried out in the same manner as in Comparative Example 3 using the ink composition thus obtained. The evaluation results are given in Table 1.

**(Table 1)**

| Example Comp. Example | Lamp | Curability | Evaluation of color | |
|---|---|---|---|---|
| | | | Immediately after exposure | 60°C, 1 week |
| Ex. 1 | HAN250NL | 3 | 2.8 | 4.0 |
| Ex. 2 | HAN250NL | 3 | 3.0 | 4.2 |
| Ex. 3 | HAN250NL | 3 | 3.0 | 4.2 |
| Ex. 4 | HAN250NL | 3 | 2.9 | 4.0 |
| Ex. 5 | HAN250NL | 3 | 3.0 | 4.1 |
| Comp. Ex. 1 | HAN250NL | 3 | 2.8 | 5.4 |
| Comp. Ex. 2 | HAN250NL | 3 | 3.3 | 6.5 |
| Comp. Ex. 3 | HAN250NL | 2 | 2.0 | 2.6 |

## Claims

1. A white ink composition for inkjet recording comprising:
an acylphosphine-based photopolymerization initiator in the amount of 12-16 wt.% based on the total weight of the ink composition;
a monomer having a heterocyclic skeleton;
a white colorant; and
at least one monomer having a cyclic hydrocarbon group selected from Formula (I) and Formula (II): 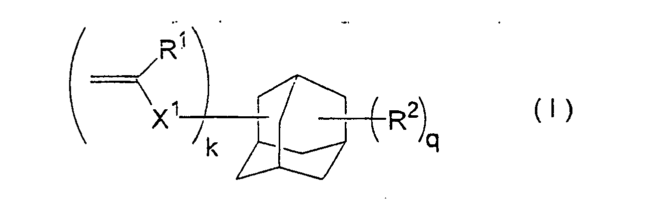 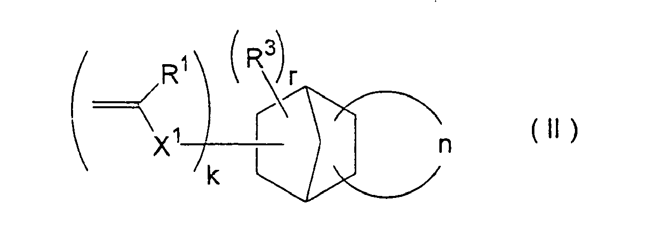 wherein R¹ denotes a hydrogen atom or a methyl group, X¹ denotes a divalent linking group, k denotes an integer from 1 to 6, each R² and each R³ independently denotes a substituent, q denotes an integer from 0 to 5, r denotes an integer from 0 to 5, and the compound represented by Formula (II) may have a cyclic hydrocarbon structure represented by n.

2. The white ink composition according to Claim 1, wherein the monomer having a heterocyclic skeleton is included in the amount of 10-60 wt.% based on the total weight of the ink composition.

3. The white ink composition according to Claim 1 or Claim 2, wherein the monomer having a heterocyclic skeleton is represented by Formula (A): 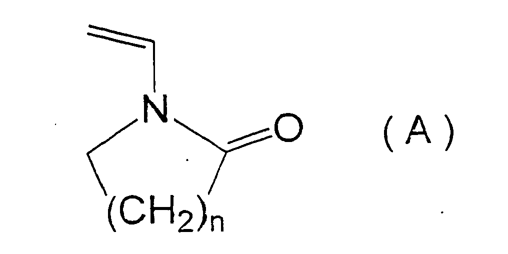 wherein n denotes an integer from 1 to 5.

4. The white ink composition according to any preceding Claim, wherein the monomer having a heterocyclic skeleton comprises a (meth)acrylate having at least one heterocyclic group selected from a furan ring, a di- or tetra-hydrofuran ring, a pyran ring, a di- or tetra-hydropyran ring, a morpholine ring, and an imide ring.

5. The white ink composition according to any preceding Claim, wherein the acylphosphine-based photopolymerization initiator is a monoacylphosphine oxide compound.

6. The white ink composition according to any preceding Claim, wherein the acylphosphine-based photopolymerization initiator is represented by Formula (1): 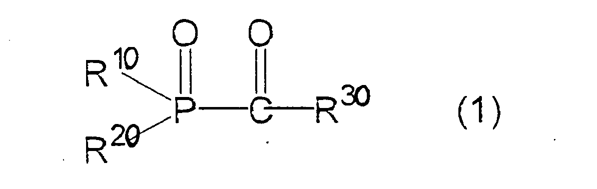 wherein R¹⁰ and R²⁰ independently denote an aliphatic group, an aromatic group, an alkoxy group, an aryloxy group, or a heterocyclic group, R³⁰ denotes an aliphatic group, an aromatic group, or a heterocyclic group, R¹⁰ and R²⁰ may together form a 5- to 9-membered ring, and the ring structure may have an oxygen atom, a nitrogen atom or a sulfur atom in the ring.

7. The white ink composition according to any preceding Claim, wherein the ink composition further comprises a monomer represented by Formula (VI): 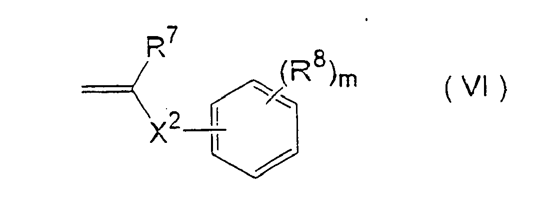 wherein R⁷ denotes a hydrogen atom or a methyl group, X² denotes a divalent linking group, each R⁸ independently denotes a monovalent or polyvalent substituent, and m denotes an integer from 0 to 5.

8. An inkjet recording method comprising:
discharging the white ink composition according to any preceding Claim onto a recording medium; and
curing the white ink composition by irradiating the discharged white ink composition with actinic radiation.

9. A printed material formed by the inkjet recording method according to Claim 8.

## Patentansprüche

1. Weiße Tintenzusammensetzung für die Tintenstrahlaufzeichnung, umfassend:
einen auf Acylphosphin basierenden Fotopolymerisationsinitiator in einer Menge von 12 bis 16 Gew.%, bezogen auf das Gesamtgewicht der Tintenzusammensetzung;
ein Monomer, das ein heterocyclisches Gerüst aufweist;
ein weißes Färbemittel; und
mindestens ein Monomer, das eine cyclische Kohlenwasserstoffgruppe aufweist, ausgewählt aus Formel (I) und Formel (II): 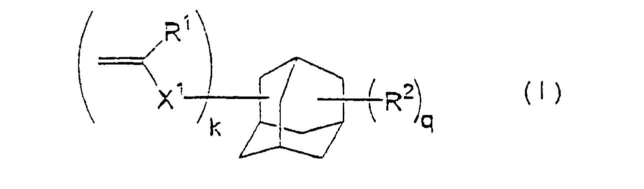 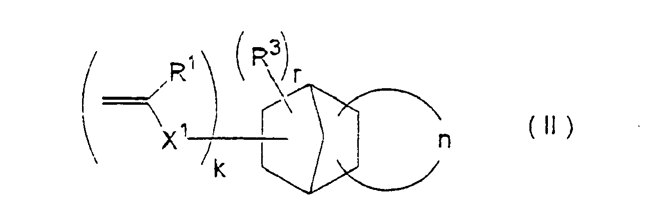 worin R¹ ein Wasserstoffatom oder eine Methylgruppe darstellt, X¹ eine divalente Verknüpfungsgruppe darstellt, k eine ganze Zahl von 1 bis 6 darstellt, jedes R² und jedes R³ unabhängig einen Substituenten bezeichnet, q eine ganze Zahl von 0 bis 5 bezeichnet, r eine ganze Zahl von 0 bis 5 bezeichnet, und die durch die Formel (II) dargestellte Verbindung eine cyclische Kohlenwasserstoffstruktur aufweisen kann, die durch n dargestellt wird.

2. Weiße Tintenzusammensetzung gemäß Anspruch 1, worin das Monomer, das ein heterocyclisches Gerüst aufweist, in einer Menge von 10 bis 60 Gew.% enthalten ist, bezogen auf das Gesamtgewicht der Tintenzusammensetzung.

3. Weiße Tintenzusammensetzung gemäß Anspruch 1 oder Anspruch 2, worin das Monomer, das ein heterocyclisches Gerüst aufweist, durch die Formel (A) dargestellt wird: 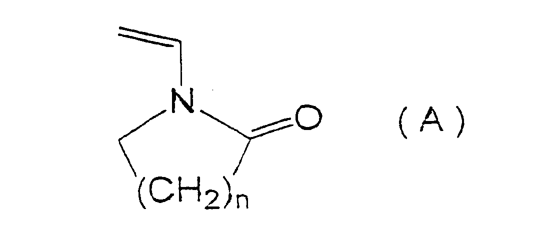 worin n eine ganze Zahl von 1 bis 5 bezeichnet.

4. Weiße Tintenzusammensetzung gemäß irgendeinem vorhergehenden Anspruch, worin das Monomer, das ein heterocyclisches Gerüst aufweist, ein (Meth)acrylat umfasst, welches mindestens eine heterocyclische Gruppe aufweist, ausgewählt aus einem Furanring, einem Di- oder Tetra-Hydrofuranring, einem Pyranring, einem Di- oder Tetra-Hydropyranring, einem Morpholinring und einem Imidring.

5. Weiße Tintenzusammensetzung gemäß irgendeinem vorhergehenden Anspruch, worin der auf Acylphosphin basierende Fotopolymerisationsinitiator eine Monoacylphosphinoxid-Verbindung ist.

6. Weiße Tintenzusammensetzung gemäß irgendeinem vorhergehenden Anspruch, worin der auf Acylphosphin basierende Fotopolymerisationsinitiator durch die Formel (1) dargestellt wird: 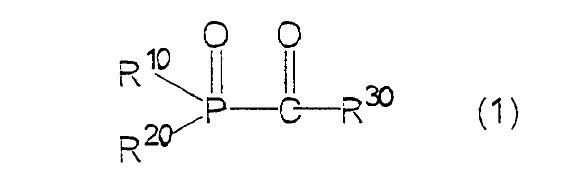 worin R¹⁰ und R²⁰ unabhängig voneinander eine aliphatische Gruppe, eine aromatische Gruppe, eine Alkoxygruppe, eine Aryloxygruppe oder eine heterocyclische Gruppe bezeichnen, R³⁰ eine aliphatische Gruppe, eine aromatische Gruppe oder eine heterocyclische Gruppe bezeichnet, R¹⁰ und R²⁰ zusammen einen 5- bis 9-gliedrigen Ring bilden können und die Ringstruktur ein Sauerstoffatom, ein Stickstoffatom oder ein Schwefelatom in dem Ring aufweisen kann.

7. Weiße Tintenzusammensetzung gemäß irgendeinem vorhergehenden Anspruch, worin die Tintenzusammensetzung ferner ein durch die Formel (VI) dargestelltes Monomer umfasst: 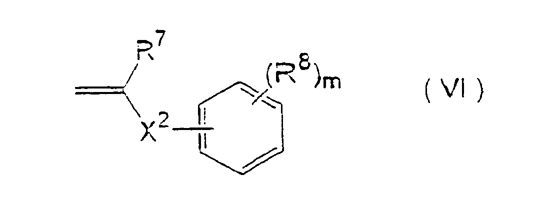 Worin R⁷ ein Wasserstoffatom oder eine Methylgruppe bezeichnet, X² eine divalente Verknüpfungsgruppe bezeichnet, jedes R⁸ unabhängig einen monovalenten oder polyvalenten Substituenten bezeichnet und m eine ganze Zahl von 0 bis 5 bezeichnet.

8. Tintenstrahlaufzeichnungsverfahren, umfassend:
Ausstoßen der weißen Tintenzusammensetzung gemäß irgendeinem vorhergehenden Anspruch auf ein Aufzeichnungsmedium; und
Härten der weißen Tintenzusammensetzung durch Bestrahlen der ausgestoßenen weißen Tintenzusammensetzung mit aktinischer Strahlung.

9. Drucksache/bedrucktes Material, gebildet mit dem Tintenstrahlaufzeichnungsverfahren gemäß Anspruch 8.

## Revendications

1. Composition d'encre blanche pour enregistrement à jet d'encre comprenant :
un initiateur de photopolymérisation à base d'acylphosphine en la quantité de 12 à 16 % en poids sur base du poids total de la composition d'encre ;
un monomère ayant un squelette hétérocyclique ;
un colorant blanc ; et
au moins un monomère ayant un groupe hydrocarbure cyclique sélectionné à partir de la Formule (I) et de la Formule (II) : 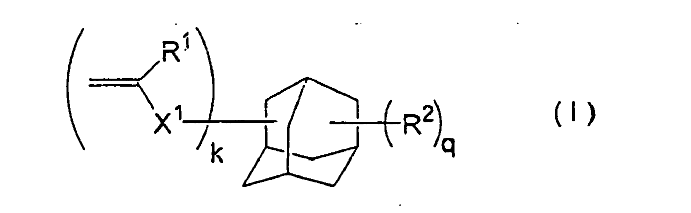 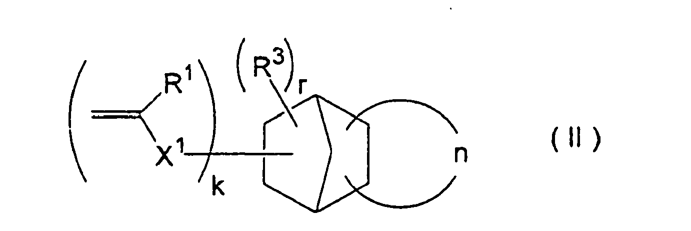 dans lesquelles R¹ désigne un atome hydrogène ou un groupe méthyle, X¹ désigne un groupe de liaison divalente, k désigne un entier de 1 à 6, chaque R² et chaque R³ désignent indépendamment un substituant, q désigne un entier de 0 à 5, r désigne un entier de 0 à 5, et le composé représenté par la Formule (II) peut avoir une structure d'hydrocarbure cyclique représentée par n.

2. Composition d'encre blanche selon la revendication 1, dans laquelle le monomère ayant un squelette hétérocyclique est inclus en la quantité de 10 à 60 % en poids sur base du poids total de la composition d'encre.

3. Composition d'encre blanche selon la revendication 1 ou la revendication 2, dans laquelle le monomère ayant un squelette hétérocyclique est représenté par la Formule (A) : 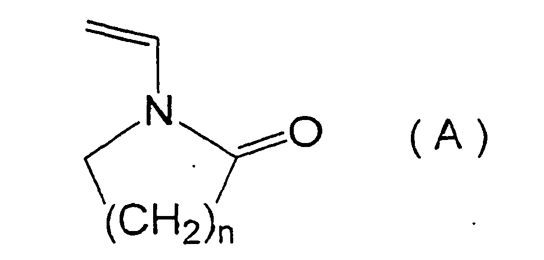 dans laquelle n désigne un entier de 1 à 5.

4. Composition d'encre blanche selon l'une quelconque des revendications précédentes, dans laquelle le monomère ayant un squelette hétérocyclique comprend un (méth)acrylate ayant au moins un groupe hétérocyclique sélectionné parmi un anneau de furanne, un anneau de di- ou tétra-hydrofuranne, un anneau de pyranne, un anneau de di- ou tétra-hydropyranne, un anneau de morpholine, et un anneau d'imide.

5. Composition d'encre blanche selon l'une quelconque des revendications précédentes, dans laquelle l'initiateur de photopolymérisation à base d'acylphosphine est un composé d'oxyde de monoacylphosphine.

6. Composition d'encre blanche selon l'une quelconque des revendications précédentes, dans laquelle l'initiateur de photopolymérisation à base d'acylphosphine est représenté par la Formule (1) : 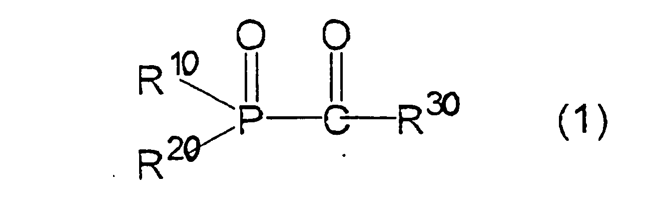 dans laquelle R¹⁰ et R²⁰ désignent indépendamment un groupe aliphatique, un groupe aromatique, un groupe alcoxy, un groupe aryloxy, ou un groupe hétérocyclique, R³⁰ désigne un groupe aliphatique, un groupe aromatique, ou un groupe hétérocyclique, R¹⁰ et R²⁰ peuvent former ensemble un anneau de 5 à 9 éléments, et la structure d'anneau peut avoir un atome d'oxygène, un atome d'azote ou un atome de soufre dans l'anneau.

7. Composition d'encre blanche selon l'une quelconque des revendications précédentes, dans laquelle la composition d'encre comprend en outre un monomère représenté par la Formule (VI) : 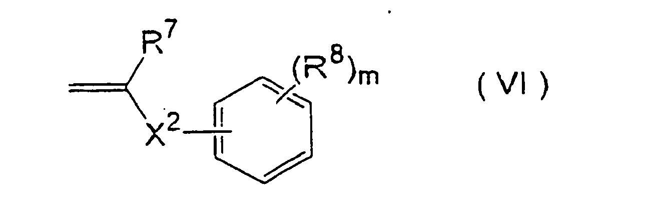 dans laquelle R⁷ désigne un atome d'hydrogène ou un groupe méthyle, X² désigne un groupe de liaison divalente, chaque R⁸ désigne indépendamment un substituant monovalent ou polyvalent, et m désigne un entier de 0 à 5.

8. Procédé d'enregistrement à jet d'encre comprenant :
la décharge de la composition d'encre blanche selon l'une quelconque des revendications précédentes sur un support d'enregistrement ; et
la cuisson de la composition d'encre blanche en irradiant la composition d'encre blanche déchargée avec un rayonnement actinique.

9. Matière imprimée formée par le procédé d'enregistrement à jet d'encre selon la revendication 8.
